# EUROPEAN PATENT SPECIFICATION

(11) **EP 2 767 035 B1**
(45) Date of publication and mention of the grant of the patent: **30.12.2015**
(21) Application number: 11781859.1
(22) Date of filing: 11.10.2011
(51) Int. Cl.: H04L 12/24, H04L 29/08

(54) **MANAGEMENT OF DATA FLOWS BETWEEN USER EQUIPMENT NODES AND CLUSTERS OF NETWORKED RESOURCE NODES**
VERWALTUNG VON DATENFLÜSSEN ZWISCHEN BENUTZERVORRICHTUNGSKNOTEN UND CLUSTERN VON NETZRESSOURCENKNOTEN
GESTION DE FLUX DE DONNÉES ENTRE DES NOEUDS D'ÉQUIPEMENT UTILISATEUR ET DES GRAPPES DE NOEUDS DE RESSOURCE EN RÉSEAU

(43) Date of publication of application: 20.08.2014
(73) Proprietor: Telefonaktiebolaget L M Ericsson (publ), 164 83 Stockholm (SE)
(72) Inventor: WOXBLOM, Mikael, S-125 42 Älvsjö (SE); FORMO, Joakim, S-184 62 Åkersberga (SE); GARDMAN, Marcus, S-127 61 Skärholmen (SE); ZALOSHNJA, Farjola, 169 74 Solna (SE)
(74) Representative: Brann AB
(86) International application number: PCT/IB2011/002384
(87) International publication number: WO 2013/054150

(56) References cited:
- US-A1- 2002 187 750
- US-A1- 2011 161 478

## Description

### TECHNICAL FIELD

The present invention relates generally to networking of resource nodes and, more particularly, to the management of data flows for networked resources.

### BACKGROUND

The Internet has evolved to include a "physical internet" including not only computers, but devices, other objects and environments with embedded data-, computation-, sensor-, location-, and communication- interaction capabilities. This potential evolution is often referred to using terminology such as "The Internet of Things", "Machine to Machine Communications", "Ubiquitous Computing", "Pervasive Computing" or "Ambient Intelligence". It has been estimated that every person is surrounded by somewhere between 1000 and 5000 intelligent objects and a global Internet of Things may in a few years consist of 50 to 100,000 billion objects whose location and status will have to be continuously monitored or updated. While the concept of such an Internet of Things may seem simple, its implementation will be far more difficult.

For example, many of today's products which link or connect networked devices are ad-hoc solutions that enable specific limited functionalities or services. Examples include file sharing and remote access software that run on a device or computer and enables remote control and/or makes data or service accessible within a Wide Area Network (WAN), Wireless (W) LAN and/or PAN. Examples of such products include Salling Clicker, Simplify Media, Apple's Airtunes and iTunes Remote for the iPhone, etc. Another category of relevant products includes devices that collect and transmit data, such as products like the wireless pedometer "Nike+ Apple" that measure parameters associated with a person's running, and Botanicalls, which is a sensor that communicates the level of humidity of the soil in a flowerpot to the web.

However, none of today's solutions for networked object interconnectivity provide holistic and unified interaction with a plurality of networked objects, environments, media and/or services based on the interrelations between them. Consequently there is no solution today that provides an intuitive way of understanding the contexts, relationships, ownership, compatibility, history, metadata, status, and dependencies of large numbers of objects that also may or may not be physically present. In addition there is no solution today that successfully supports the users' weak conceptual understanding of digital networks as such, i.e. the mental model of possible interactions and simultaneous interconnectivities within a digital network consisting of numerous devices and/or services.

Patent publications US2011/161478A1 and US 2002/187750A1 disclose methods for managing by a resource management node the resource nodes connected to a network.

Accordingly, it would be desirable to provide systems, methods, devices and software associated with the management and interconnectivity of networked resource nodes which overcomes the afore-described challenges by addressing, among other things, management of their associations, data flows, and responses to triggering events.

### SUMMARY

The following example embodiments provide a number of advantages and benefits relative to existing resource management software, devices, systems and methods including, for example, using logical clustering of networked resource nodes to facilitate management of data flows between users and the resource nodes, as well as between the resource nodes themselves. It will be appreciated by those skilled in the art, however, that the claims are not limited to those embodiments which produce any or all of these advantages or benefits and that other advantages and benefits may be realized depending upon the particular implementation.

An example embodiment is directed to a method by a resource management node for managing resource nodes connected to a network. The method includes establishing clusters of the resource nodes and associated data flows that are permitted between the resource nodes within each cluster and a user equipment node through the network, and associated rules that control the data flows. A first one of the rules is determined to have been satisfied for controlling a data flow for a first resource node in a first cluster. Information is communicated to the user equipment node that causes the user equipment node to prioritize handling of the data flow for the first resource node and other resource nodes in the first cluster in response to the first rule being satisfied.

In some further embodiments, complementary functionality provided by particular ones of the resource nodes is identified. The first cluster is established to contain the particular ones of the resource nodes having the identified complementary functionality. Identification of the complementary functionality can include determining spatial proximity of the particular ones of the resource nodes to the first resource node controlled by the first rules being satisfied, and establishing the first cluster to contain selected ones of the particular resource nodes having relative spatial proximity that satisfies one or more defined rules.

By establishing clusters of resource nodes having complementary functionality, example embodiments can provide more advanced and/or useful functionality to a user and can facilitate the user's understanding and management of the functionality. Moreover, resources nodes within a same cluster may be allowed to establish data flows therebetween without needing pre-authorization from a user, and/or may be allowed to push information or otherwise communicate through a data flow to a user equipment node in a manner not allowed by resource nodes outside that cluster.

Another example embodiment is directed to a resource management node that manages a plurality of resource nodes connected to a network. The resource management node includes an interaction flow database and an interaction execution engine. The interaction flow database contains information defining clusters of the resource nodes and associated data flows that are permitted between the resource nodes within each cluster and a user equipment node through the network, and defining associated rules that control the data flows. The interaction execution engine is configured to determine that a first one of the rules has been satisfied for controlling a data flow for a first resource node in a first cluster. The interaction execution engine is further configured to communicate information to the user equipment node that causes the user equipment node to prioritize handling of the data flow for the first resource node and other resource nodes in the first cluster in response to the first rule being satisfied.

Another example embodiment is directed to a user equipment node that controls a resource management node that manages a plurality of resources nodes connected to a network. The user equipment node includes a network interface configured to communicate with the resource management node through the network, and a controller circuit. The controller circuit receives information from the resource management node that identifies a resource node for which a defined rule has been satisfied, identifies other resources nodes that are in a same defined cluster as the resource node, and prioritizes handling of a data flow for the resource node and the identified other resource nodes in the same defined cluster.

Other methods, resource management nodes, and user equipment nodes according to embodiments of the invention will be or become apparent to one with skill in the art upon review of the following drawings and detailed description. It is intended that all such additional methods, resource management nodes, and user equipment nodes be included within this description, be within the scope of the present invention, and be protected by the accompanying claims. Moreover, it is intended that all embodiments disclosed herein can be implemented separately or combined in any way and/or combination.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 illustrates a plurality of networked objects managed by a system according to an example embodiment;
Figure 2 depicts another plurality of network objects being managed in accordance with another example embodiment;
Figure 3 shows an example user interface which can be used in accordance with an example embodiment;
Figure 4 illustrates an example layered architecture which can be used in accordance with an example embodiment;
Figure 5 shows example relationships between architectural elements in accordance with an example embodiment;
Figure 6 illustrates a more detailed architectural schematic for implementing management of networked objects using social principles according to an example embodiment;
Figures 7(a)-7(c) show user interfaces associated with other example embodiments;
Figure 8 depicts another architecture for providing management of networked objects using social mapping principles according to an example embodiment;
Figure 9 illustrates an example mobile device which can be used in conjunction with example embodiments;
Figure 10 illustrates an example server device which can be used in conjunction with example embodiments;
Figure 11 is a flowchart depicting operations and methods for managing networked objects according to an example embodiment;
Figure 12 is a flowchart depicting other operations and methods for managing networked objects according to an example embodiment;
Figure 13 depicts another architecture that includes a resource management node that manages a plurality of resource nodes, which are connected to a network, using operations and methods according to some example embodiments;
Figure 14 depicts an example system that implements the components of Figure 13 in a home or other building according to some example embodiments;
Figures 15-24 are flowcharts depicting methods and operations for establishing clusters of resource nodes and managing data flows between the resource nodes within a particular cluster and a user equipment node(s), according to example embodiments; and
Figure 25 is a block diagram of example components that may be included in the resource management node, one or more of the resource nodes, and/or the user equipment node of the system of Figure 13 according to some embodiments.

### DETAILED DESCRIPTION

The following detailed description of the example embodiments refers to the accompanying drawings. The same reference numbers in different drawings identify the same or similar elements. Also, the following detailed description does not limit the invention. Instead, the scope of the invention is defined by the appended claims.

According to example embodiments, systems, methods, devices and software (computer programs) for management of, and interaction with, networked objects are based on social mapping principles. Such example embodiments provide for holistic management of a plurality of networked objects including, for example, electronic devices, sensors, computers, services and users. Moreover, example embodiments provide a presentation layer where each networked object is represented by a unique and identifiable profile that contains information about each object's system characteristics. By making the relationship between networked objects, as well as relationships between networked objects and users, analogous to, e.g., social mapping principles like "friendship" (i.e. a notion of trust or ownership relationship and access control), example embodiments make objects' relations intuitive to understand for the users. Example embodiments utilize a recognizable resemblance to a social network in order to enable users to form a holistic mental model of potentially large numbers of networked nodes with simultaneous interconnections and interrelations with each other.

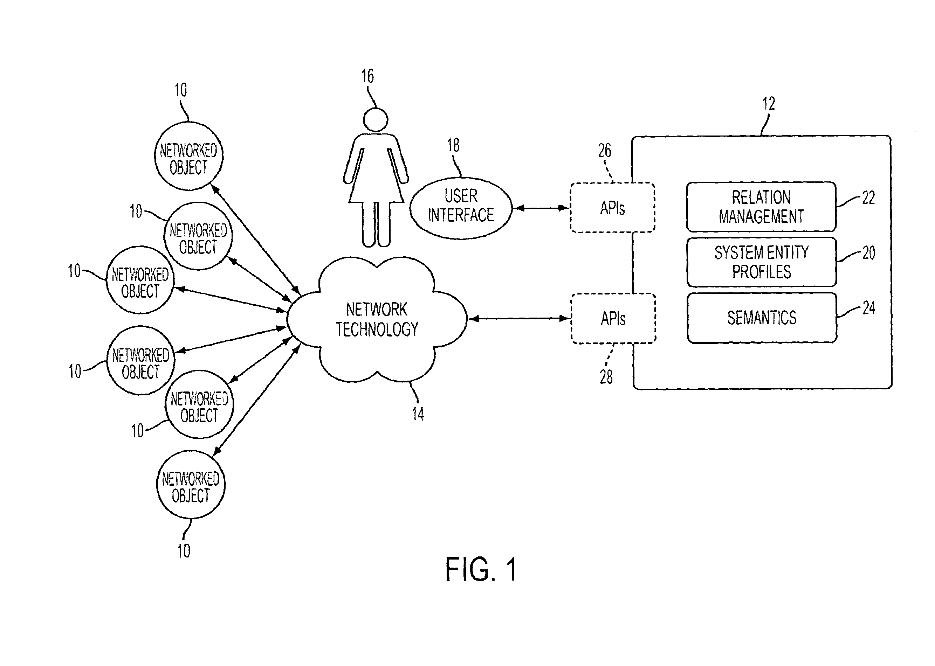

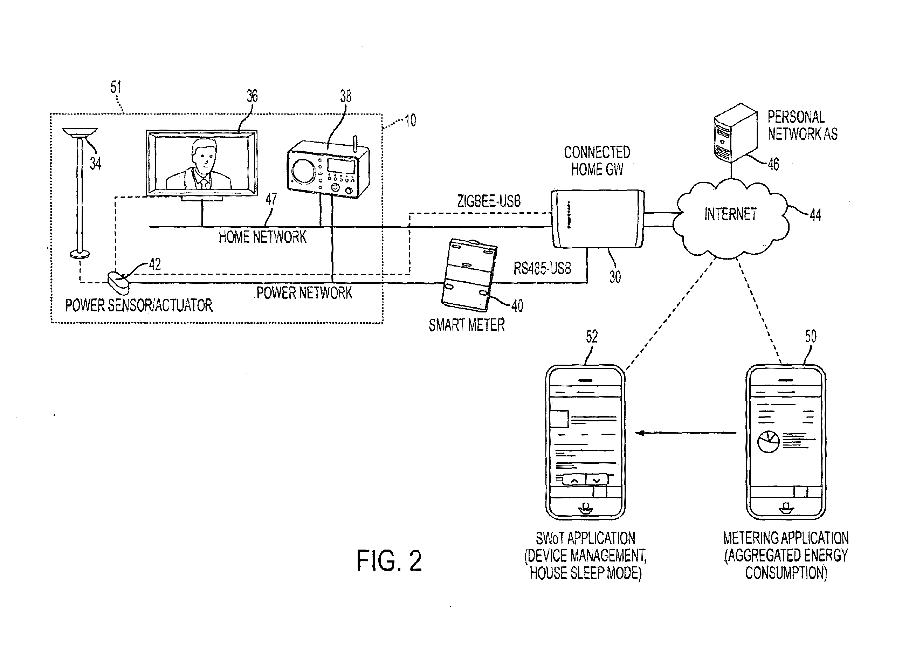

Prior to discussing detailed signaling mechanisms which facilitate such networks of objects according to example embodiments, a high level architectural view of the system followed by several examples will be described with respect to Figures 1 and 2 to provide more context for the reader regarding the resulting systems as they can be experienced by users. Starting with Figure 1, the system architecture at a high level according to example embodiments is illustrated. Therein, a plurality of networked objects 10 is connected to the system 12 via a variety of network technologies 14, e.g., the Internet, a WAN, etc. The users 16 can access the services provided by the system 12 via user interfaces 18 whose implementation which will vary depending upon, for example, the context and the end user device on which the particular user interface 18 is running, e.g., mobile devices, computers, laptops, televisions or other devices.

The system 12 which manages the networked objects 10 can, for example, be implemented, at least in part, as server-based software. Persons that are using the system 12, i.e., the users 16, are represented and identified as entities in the system 12 by unique user profiles in the system. The networked objects 10 can also be represented and identified in the system 12 by unique profiles. Networked objects 10 include, but are not limited to: consumer electronics, digitally tagged objects, computer devices, mobiles, sensors, buildings, vehicles or even companies, brands, services and physical locations. Both the profiles that represent users 16 and network objects 10 in the system 12 are jointly referred to herein as system entity profiles 20.

Data associated with the plurality of networked objects 10 and users 16 is received by the system 12. The system 12 creates system entity profiles 20 for each networked object 10 and user 16. The system entity profiles 20 may include, but are not limited to, information about name, technical specifications, manufacturer, capability, location, history and other metadata associated with the respective networked object 10 or user 16. According to example embodiments it is also possible to aggregate multiple networked objects under a common profile, i.e., not all objects necessarily have their own individually unique IDs or system entity profiles 20 in the system. For example, if a user connects 20 location sensors at home this group of location sensors may be identified in the system as one home location sensor. This aggregation can be performed, for example, at the GW to the system 12 or in the backend system.

The system 12 also includes a relation management function 22 which coordinates the interactions between the networked objects 10 by applying social management principles, e.g., using the afore-described friendship analog. The system 12 issues queries, described in more detail below, in order to establish relationships between system entities 10 and 16 by, for example, sending a system entity's profile 20 to a potentially relevant system entity based on the profile data and network access credentials of the receiving system entity. A relationship is established by the relation management function 22 based on the confirmation from the user(s) 16 or the system entity itself, i.e. multiple system entities can establish relationships with a single system entity. System entities can share temporal and permanent relationships with other system entities. Many separated and simultaneous network sites can exist, and the information and communication can be, according to example embodiments, limited to a specific group of system entities defined by their relationship to each other. There can also be temporal or permanent connections between system entities belonging to different network sites.

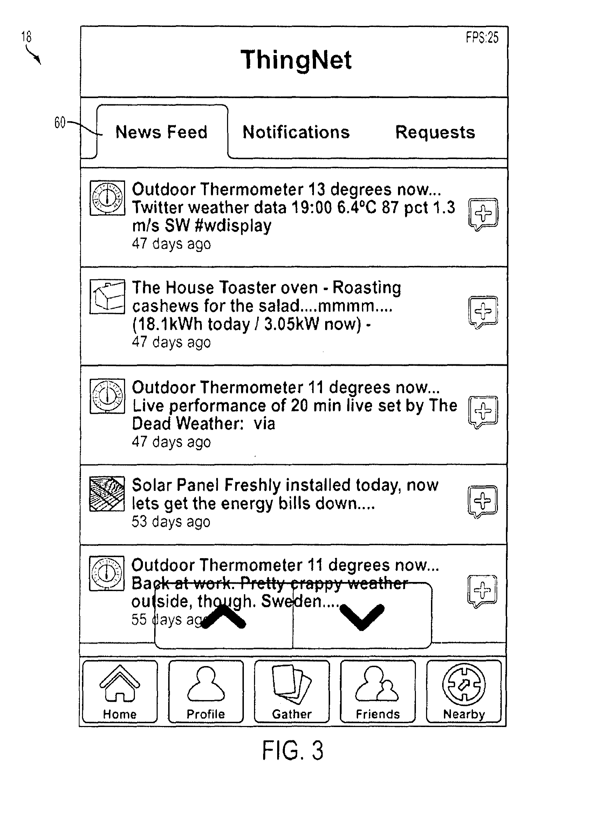

The semantics function 24 includes functionality that allows, e.g., device manufacturers, to establish devices with a brand-dependent semantic interaction language where applicable. For example, a Sony TV could communicate in 'Sony language' (e.g. 'like' other Sony devices or content, relate to Sony PS games or Sony brand etc.) Other semantic layers are also possible, see e.g., the toaster or solar panel examples in the user interface screen of Figure 3 described below. Semantics can also be user-defined (e.g., reflecting a certain level of maturity in operating a device translating into complexity of the user interface). Additional semantic layers could also include, for example, types of jargon or even slang. The semantics function 24 can also provide a natural language translator/interpreter/generator, i.e., a mechanism which translates machine signals or languages into languages which are more meaningful to humans.

The system 12 may interface with its objects 10 and users 16 through a set of Application Programming Interfaces (APIs) 26 and 28 in order to establish relationships using social mapping principles and also to exercise those relationships in performance of various task requests. Different user interaction paradigms can be used in order to manage the query/confirmation procedure. A user 16 could for example confirm a relationship query transmitted to it by the relation management function 22 of the system 12 by pressing a button in a graphical user interface, or both the query and confirmation of a relationship between two system entities could be done in one operation by physically bringing together the objects, using Near Field Communication (NFC) or a similar mechanism.

To better understand the usefulness of networking objects and users using social mapping principles according to an example embodiments, consider the following usage scenario involving remote control of a television. Assuming that both the user 16 and a TV (one of the networked objects 10) have already been set up with the system 12 and are therefore represented by system entities with corresponding system entity profiles 20, the user 16 can for example send a task request, for example via user interface 18 and API 26 to the TV's system entity (operative within system 12) requesting the system 12 to record a certain TV program. The system entity in system 12 associated with the TV will accept and acknowledge this instruction, even if the TV is in fact not capable of recording anything itself if it has a predetermined type of relationship, e.g., is friends with, another networked object 10 which can perform the requested service.

For example, suppose that the system entity of the TV has a friendship relationship with the system entity of a video recorder. In this case, the system entity of the TV can take responsibility for the request from the user 16 and relay the command to the system entity of the video recorder, which could, for example, be a representation of a physical device, a software functionality in the system, or a service provided via the network. The networked object video recorder 10 will actually execute the job, i.e., which is essentially 'subcontracted' to it by the TV's system entity in system 12, and the user 16 will receive a confirmation from the TV's system entity (again via API 26 and user interface 18) that the requested task will be performed, and later on that it has been successfully completed.

As another example, consider an example embodiment wherein a user buys a network attached storage device (NAS) for his or her home media repository. When the NAS is connected to the user's home LAN, the NAS is discovered via a predetermined procedure (e.g., Universal Plug and Play (UPnP), Bonjour, Digital Living Room Network Alliance (DLNA) or a similar mechanism) and a notification about the new device is delivered to the system 12. The system 12 creates a system entity profile 20 for the new device and sends a request to the user's application interface 18, e.g., on his or her mobile phone, to accept (or reject) the connection of the system entity of the new device. Once the user confirms that the NAS is permitted to join the group of system entities present in his or her 'Social Web of Things', other devices (such as media players) that are already part of this friendship related group and have the capabilities to establish a service relationship with this device, can use the NAS as media source.

Yet another example is illustrated in Figure 2. Therein, the system 12 is, at least in part, implemented as a home gateway (GW) 30. In this example, the networked objects 10 include various power consuming devices including, e.g., a light, 34, a television 36, and a radio 38 which are connected both to the GW 30 and to a power network. In this context, a Personal Network (PN) can be considered to include a set of networked objects with which a particular user (or group of users, e.g., a family) has a relationship. A power meter 40 provides the GW 30 with information about power consumption on the network and one or more power sensor/actuators 42 can be used to monitor and/or control the networked objects 10.

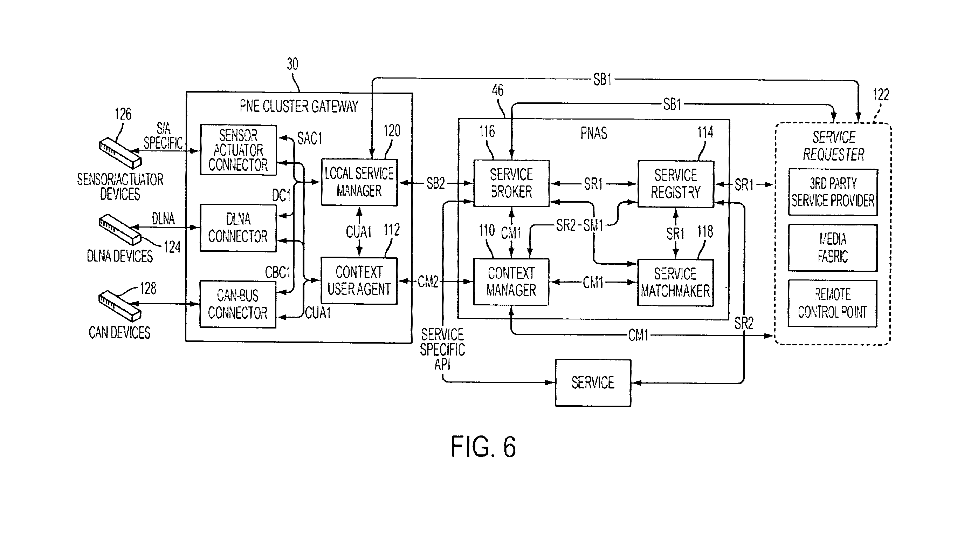

The GW 30 is also connected to an outside network, e.g., the Internet 44, which enables it to communicate with an application server (AS) 46. This AS 46 can, for example, perform other functions of the system 12 described above if those functions are not performed in the GW 30. Alternatively, or additionally, AS 46 can perform other functions that are available to the owner/user associated with the network 47. Various external applications can also interface with the system via GW 30. For example, a metering application can be running on a user's device 50 to monitor and display the aggregated energy consumption associated with the devices at his or her home 51. Alternatively, or additionally, the user 16 can manage the devices 34, 36 and 38 via an application running on his or her mobile phone 52. More details associated with an example gateway 30 and AS 46 which can be used to implement the example embodiment of Figure 2 are described below with respect to Figure 6.

A more detailed, yet purely illustrative user interface 18 which can, for example, operate on a mobile phone or other end user terminal device and permit a user 16 to interact with the system 12 is shown in Figure 3. Therein, a plurality of rows of items associated with a currently in focus News Feed tab 60 of the user interface 18 are shown, each of which provides, for example, information provided from a networked object 10. Other features (in Figure 3 indicated as tabs), not currently in focus, can provide the user 16 with information relating to notifications from the system 12 related to networked objects 10 and requests, e.g., requests by a device to become a "friend" to the user and join the system entities associated with that user 16. Along the bottom of this example user interface 18 are a number of selectable user interface elements including, for example, a "Home" element which returns the user to the presently viewed screen, a "Profile" element which enables the user 16 to access the system entity profiles 20, a "Gather" element which provides a mechanism for the user to interact with information aggregated from various networked objects, e.g., the total power consumption of devices in a household or the aggregated media base of a user from various media servers, a "Friends" element which, when actuated, lists the networked objects that have already established friend relationships with this user and a "Nearby" element which when actuated, displays information regarding networked objects that are near to the user's mobile phone or terminal device and their relationship to the user.

As mentioned previously, the system 12 according to example embodiments can establish different hierarchical levels of relationship between the system entities which the system 12 manages using social mapping principles so as to be more user friendly and to make it easier for a user 16 to relate to the managed network objects 10. For example, a top level relation could be "*the owner*"; a relational description in the system when a person owns an object. A networked object 10 could have several owners. In some cases, a system entity associated with one networked object 10 or user 16 (i.e., a device or a persona) may need to have administrative rights, and be in control of access or use of, another networked object 10, even if the system entity is not the owner of that networked object. In this case, example embodiments provide a relation designation referred to herein as "*best friend*"*,* i.e., someone that is closer, has better access and more privileges than the level below; i.e., "*friends*". Networked objects may also be present in a system which do not have any of these preferred relationships with the users or other networked objects and are herein referred to as "*strangers*". Moreover, it will be appreciated that although three different levels of preferred relationships for networked objects are described above, that different implementations of these example embodiments may use more or fewer such levels to implement social mapping principles for networked object management. A summary of example relational descriptors and their associated functional characteristics is provided below in Table 1.

**Table 1**

| **Relational Descriptor** | **Characteristics** |
|---|---|
| Owner | The user or networked object which possesses this relational descriptor in a stored system profile relative to another networked object has administrative rights to configure that networked object as well as best friend access rights to that networked object. |
| Best Friend | The user or networked object which possesses this relational descriptor in a stored system profile relative to another networked object has the highest level of access rights (but no administrative rights) with respect to that networked object. For example, a user or networked object which is best friends with a particular networked object can expect to receive higher bandwidth/QoS priority for their task requests than other users or networked objects which have a less favored relationship, e.g., friends or strangers |
| Friend | The user or networked object which possesses this relational descriptor in a stored system profile relative to another networked object has the second highest level of access rights with respect to that networked object. For example, as compared to users or networked objects which are considered to be strangers toward a given networked object, friends can accept task requests from other friends without requiring an owner or user to first authorize the request. Friends will have lower priority than best friends in terms of bandwidth and QoS with respect to task requests. |
| Stranger | The user or networked object which possesses this relational descriptor in a stored system profile relative to another networked object has no established relationship with that networked object. Tasks requests from a stranger may need to be authorized by an owner or user, or may be rejected outright. |

Relation management function 22 of system 12 establishes and manages these different levels of relationship between networked objects 10 and users 16. For example, networked objects 10 and users 16 (or networked objects 10 and other networked objects 10) which are designated as friends are interconnected and have reciprocal access to each other's information/data/functionality. Devices which are friends are set by the system 12 to help each other, execute requested tasks for each other and inform each other about their status, but according to example embodiments they cannot administer each other. A 'friend' relation can have a temporal quality (e.g., rental car, hotel room, etc.) or may be permanent. The social mapping paradigm described above can be further extended to include additional levels which are easily distinguished by users, for example, 'friends of friends' or peripheral 'acquaintances'. Networked devices which have this latter relationship relative to other devices or users are not, according to some example embodiments, directly connected with those other devices or users, but could, for example, be present in the form of their functionality or service they provide. The value of such relations as they are used in systems and methods which manage networked objects using social mapping principles according to example embodiments is explained in more detail below.

Any system entity associated with system 12 can be aware of functionality provided by networked objects 10 with whom it has a predetermined relationship or level of friendship, e.g., the functionality of networked objects 10 which is managed by that system entity's best friends' friends. Consider the previously described example with the TV and the video recorder (e.g., VCR), in a scenario where the TV relays the task to the VCR, but the VCR for some reason was unavailable or incapable of executing the requested task (e.g., recording a TV program). In this case, the TV (or more precisely the system entity in system 12 which corresponds to the TV) may be aware of other options for performing the requested task, e.g., other networked nodes that have the needed capability but with which it may or may not have a direct friend relationship. If those other options are not directly available to the TV, it may be possible that such functionality could be made available to the TV utilizing the friendship relations of others to ask for a specific favor. For example, if the TV's owner/best friend (e.g., user/human 16 or networked object 10) has a friend that is connected to a system entity that can provide the functionality needed, the system 12 can send a message to that system entity requesting that, e.g., the requested program be recorded and stored.

To develop the latter example scenario further, suppose that the TV (networked object 10) and/or its corresponding system entity in system 12 is aware that a friend (i.e., a person, in another household) of its owner (and/or best friend) have the needed functionality in his or her network. Then, the TV could be set to ask its owner if it is permitted to contact the owner's friend to ask for the needed favor (e.g., recording and storing a specific TV program). If the TV's owner's friend agrees to this, perhaps even based on predetermined criteria like remaining/maximum storage space and time, a device that is able execute the requested functionality could make this functionality available to the TV. Moreover, even if the TV in network A is not a friend of the recording device in network B (e.g., these two networked objects may not even 'see' each other through the network, but instead only transmit/request signals associated with the favor that is requested/provided) it may still be able to relay the task of recording of the TV program to the recording device in network B, possibly upon authorization from a system entity having a sufficiently high friendship relation with that recording device.

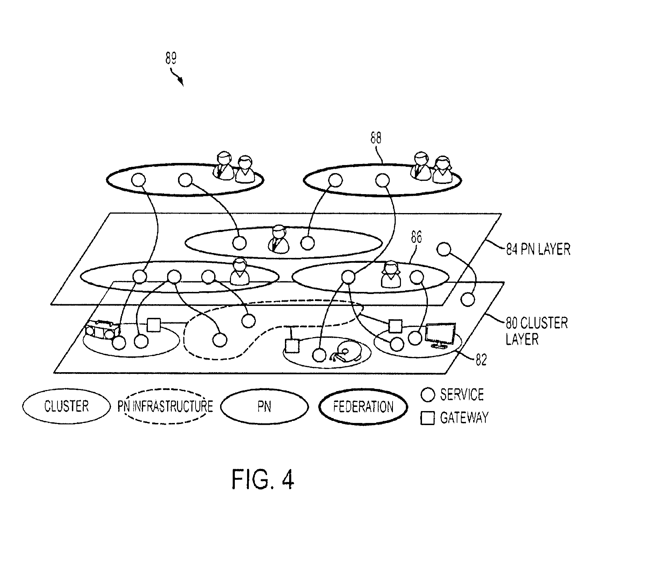

In order to provide the underlying signaling, logic and lower level architecture needed to accomplish these various scenarios which use social mapping principles applied to managed networked objects, a personal networking (PN) architecture can be used as will now be described with respect to Figures 4-6 below. However it will be appreciated by those skilled in the art that other types of lower level architecture than those described below could be used instead to accomplish the higher level functionality described above in accordance with Figures 1-3. According to these example embodiments, a PN architecture shown generally in Figure 4 connects consumer devices (sometimes called Personal Network Entities, PNEs, herein or networked objects 10 as described above) that reside in a local network; through gateway devices (PNE Cluster Gateways) to server-side enablers (Personal Network Application Server, PNAS) and from there optionally to 3^{rd} Party Service and Content Providers. Note, however, that the PNE cluster gateways can be implemented as physical, standalone nodes or, alternatively, as logical functions which are physically implemented on one or more of the networked objects themselves. In the latter case, networked objects may not need to communicate via GW devices per se.

Therein, the cluster layer 80 is the lowest layer, where services are not under control of the PN system according to this example embodiment. A PNE Cluster, e.g., cluster 82, includes a set of devices and a PNE Cluster Gateway (e.g., as shown in Figure 2) where the gateway communicates with the devices locally. A PNE Cluster 82 also includes the services that are hosted by the devices and the PNE cluster gateway, e.g., gateway 30 in Figure 2. Each PNE Cluster 82 is assumed, according to this example embodiment, to communicate over a gateway and is hence identifiable and addressable via this gateway. A PNE Cluster Gateway communicates with the PNAS over wide-area networks and with devices within the PN Cluster 82 over local access networks. A PNE device or networked object 10 may be part of two or more PNE Clusters 82. A service in this cluster layer 80 may be provided in a non-personalized way, as for example a DLNA service including services provided locally by a device and services provided by a 3^{rd} Party. Services in this layer are directly accessible from the PNE Cluster Gateway.

Moving up in the hierarchy of layers shown in Figure 4, the PN Layer 84 manages services that are under control of the PN system. According to this example embodiment, the PN system is responsible primarily for device and service management in PNs, management of users and association to PNs, authentication and authorization of a service requester, filtering on the context information exposure, and management of watchers on the events in PNs. A Personal Network (PN) 86 can be defined as an overlay network consisting of one or multiple PNE Clusters 82. A PN 86 is assigned to a single PN user who is called the PN owner in this example embodiment. A PN 86 enables the owner to consume a service within the PN regardless of the cluster in which the service exists, e.g., as described above using friendship relations. The PN owner may consume a service provided by a 3^{rd} party or by other PNs by a device in the PN. PN 86 also enables the owner to expose the devices and services within the PN to 3^{rd} party Service Providers and consumers in a controlled way, managing for example access restriction, privacy protection and service abstraction from the devices, e.g., by using the social mapping conventions described above with respect to Figures 1-3. A service in this PN layer 84 may access context information aggregated within the PN, for example for service personalization. The PN architecture assumes that each device, service, PNE cluster, and the PN is identifiable and addressable.

Services from different PNs may form an overlay service network called a PN federation 88. A PN federation 88 facilitates sharing of devices and services among multiple PNs 86, while privacy and security can be maintained across the whole PN federation 88. Thus, the PN Federation Layer 89 provides a mechanism for grouping PN services and service requesters under a single federation policy. Each PN 86 taking part in a PN Federation 88 can have its own policies to control what devices and services in the PN are made available to the other PNs in the PN Federation. In other words the set of devices and services available in a PN Federation is not always equal to the set of all devices and services in the participating PNs.

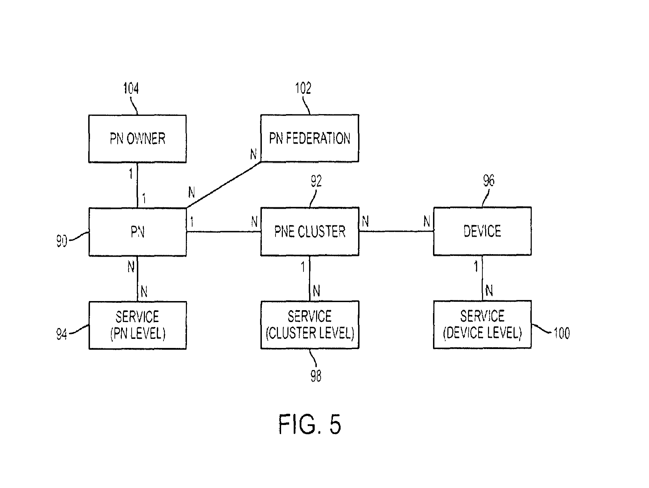

Figure 5 shows an example relationship among the different entities described above with respect to the example embodiment Figure 4, e.g., which entities relate to other entities in either a 1:1 relationship or a 1 :many (N) relationship. Therein, one PN 90 can include multiple PNE Clusters 92 and PN-level Services 94. One PNE Cluster 92 can include multiple devices 96 and Cluster-level services 98. A device can include multiple device-level services 100. It will be appreciated that as used in this context, N can be a number which is equal zero or be a number which is greater than zero. A PN 90 can belong to N PN Federations 102, which in turn can include N PNs 90. As mentioned above, a PN owner 104 typically has a one to one relationship with his or her own PN 90. The services 94, 98 and 100 illustrated in Figure 5 typically can be categorized as shown below in Table 2.

**Table 2: Service Types**

| Type | Description | Example |
|---|---|---|
| PN level | A service that is associated with a PN and is not a cluster level service. | - A VoD service that the user has associated his PN to consume the service by a specific device in the PN. |
| | | - A composite service that utilize services provided by clusters. |
| Cluster level | A service that is provided by a PNE cluster gateway | A composite service to control a DLNA device according to a room occupancy sensor. |
| Device level | A service that is provided by a device | Media Renderer service of DLNA device |
| External | Service that is provided by an external entity | Google Map |

Regarding the identities of the various entities described above with respect to Figures 4 and 5, the identity of a device 96, i.e., a networked object 10, can be for example provided by the device manufacturer, e.g., a MAC address. However, device identities could also be provided in other ways, e.g., on an IP level by a home DNS service or using explicit names, e.g., entered into the system by user configuration. Device-level services 100 are identifiable inside the respective device 96, which means that the cluster-level service is able to identify the device level service 100 by using a combination of the device 96's identity and the identity of the device level service 100. The identity of a cluster-level service 98 identifies the service uniquely within the cluster. In conjunction with the PNE cluster 92's identity, a PN level service 94 is able to identify the cluster-level service 98.
The identity of a PN-level service 94 identifies the service uniquely within the PN 90. In conjunction with a PN 90's identity, service requesters are able to identify a PN-level service 94 if there is a Service Level Agreement (SLA) in place between the PN and the service requesters.

Figure 6 provides a more detailed architectural view of a gateway 30, an associated PN AS 46 and their interactions with a service requester according to an example embodiment which can be used to jointly provide management of networked objects using social mapping principles. Table 3 below provides a brief description of each of the logical interfaces illustrated in Figure 6.

**Table 3: Short description of each logical interface**

| Interface | Owner | Description |
|---|---|---|
| CM1 | Context Manager | PN enablers and any 3^{rd} party may retrieve and update the PN context information. |
| CM2 | Context Manager | The Context User Agent uploads to the Context Manager the context information generated in the cluster, and it downloads the entire or a part of the PN context information from the Context Manager when necessary. |
| SB1 | Service Broker | The Service Requester invokes services in the Service Broker. |
| SB2 | Service Broker | The Service Broker invokes a service in the Local Service Manager. |
| SR1 | Service Registry | 3^{rd} party SPs or PN enablers query for the registered services in the Service Registry. |
| SR2 | Service Registry | 3^{rd} party SPs or PN enablers register services in the Service Registry |
| SM1 | Service Matchmaker | PN enablers request service matchmaking and receive the result. |
| CUA1 | Context User Agent | Connectors and services in the Local Service Manager request population and retrieval of the context information. |
| SAC1 | Sensor Actuator Connector | Services in the LSM invoke services on the Service Actuator Connector |
| DC1 | DLNA Connector | Services in the LSM invoke services on the DLNA Connector |
| CBC1 | CAN Bus Connector | Services in the LSM invoke services on the CAN Bus Connector |

As seen in Figure 6, context management is provided in order to determine device capabilities, friendship relations and user situations to, in turn, be able to make intelligent adaptations of the media delivered in response to a service request. These adaptations can range from selection of variants (e.g., low-res thumbnails to mobiles; hi-res widescreen to HDTV's, hi-res with interaction to users who have a mobile phone and a TV at the same time) to various types of transcoding, including content adaptation (i.e. personalization). A PN 90 according to example embodiments is associated with context information where the information related to the devices and services in the PN are stored. Context Management is the function according to example embodiments that aggregates the context information from each cluster in the PN 90 and exposes it to a context consumer. Service Providers, Content Providers and end users are context consumers. The Context Management function authenticates and authorizes accesses to the context information and filters the information to be exposed so that the end user and the operator can control the information to be exposed.

More specifically, a context manager 110 is provided in the PN AS 46 (and counterpart context user agent 112 in the gateway 30). According to example embodiments, there are two approaches to process context information. One is to store the information in the original format provided by each device standard and to require that any context consumers understand this format. The alternative is to store the context information using a unified model. The latter has an advantage in that it enables the context manager 110 to generate comprehensive context information based on the elementary information from different types of devices such as DLNA devices 124, sensor/actuator devices 126, and CAN devices 128, while the former enables utilization of existing standards as much as possible. In either implementation, context management implies interacting with database-backed systems. Thus, according to one example embodiment, the context management system 110, 112 contains the following databases:
1. A device capability database (e.g., defining what type of media a PS3 can handle or which media formats and streaming protocols are supported by a iPhone 3.0). This database typically needs to be manually populated primarily because it is difficult to automatically derive this information, the database typically only needs to be created once, and typically can be created by the manufacturer (e.g., referenced by the device, in the same way as UAProf).
2. A service required capabilities database which describes what a service would require to be meaningfully consumed. This database typically is also created only once, by the service provider (or a proxy for the service provider, like the operator).
3. A database or list indicating which devices and user-provided services are available in particular user situations, also known as the "personal network" (this data structure can typically be populated automatically, e.g., via a discovery process, at least in the DLNA-case) and to which of the device types and situational parameters those services match. This data structure may be updated seldomly (e.g., when a device is "paired" or "discovered") and can be created by the gateway 30.
4. A database or list indicating what the other parameters of the situation are, e.g., sensor readings which are semi-persistent, such as the location. This data structure can, for example, be updated several times of day and can be created by the gateway 30 or by the operator and attached to the database representation (in the case of location, for instance).
5. A database, list or other data structure indicating the current status of a particular device or personal network (e.g., if the PN has the same constraints throughout, and can be represented by the PNE Cluster GW). Current bandwidth and other situational parameters, such as ambient temperature, light level, physical orientation, etc. can be stored in this data structure which will get updated relatively often, e.g., by the gateway 30.

This data enables the gateway 30 and/or the PN AS 46 according to example embodiments to intelligently adapt service provision as described above in the example service request scenarios which involve "friend" devices or, more generally, task requests which involve networked objects having at least a predetermined relationship level in a given hierarchical implementation of relationship levels. Note that not all of this information is necessary to every application or service request. Thus, the application of service which needs the information can query the databases containing this information (which may or may not be present at the same location, e.g., in the same operator database). Alternatively, there can be a proxy provided for the information which is queried. The latter approach has several advantages, for instance the ability to integrate with existing systems (e.g. XDMS) very easily; and the user can determine a policy for what is delivered to whom. The query itself can take various forms, for instance, a SPARQL or XQUERY query; a web services document submitted to a URL (REST or SOAP-wise), an ISC request, etc.

In addition to context management in support of networked object management employing social mapping principles, various functions in support of service management are also shown in Figure 6. Therein, the example PN architecture enables a PN owner to expose services from his or her PN so that they are accessible by a service requester such as a service provider, a contents provider and end users other than the PN owner. The exposed service may be described in a device-independent way, which makes it possible for the PN owner to decide by which device he wants to receive the service. The exposed service may require certain capabilities on the service consumers so that an inappropriate device or application is not proposed to the PN owner as a consumer of the service. For example, when a media rendering service exposed by a PN invokes a request for rendering a video or audio clip, the PN owner receives a notification with a list of candidate devices that are located nearby and are capable of consuming the given media, enabling the user to choose which device to use.

Hence, the Service Management function in the PN architecture of the example embodiment of Figure 6 mediates between the Service Requester and the user, keeping the balance between fine-grained service delivery and protecting the user's privacy. In this example, the Service Management function includes the Service Registry 114, the Service Broker 116, the Service Matchmaker 118 and the Local Service Manager 120. The Service Registry 114 is the single point of contact for other PN enablers or a Service Requester 122 to find the requested service. The Service Broker 116 and the Local Service Manager 120 host services that are accessed by a Service Requester 122. The Service Matchmaker 118 compares the requirement of the services in the Service Registry 114 with device capability and other context information of the PN, and the matched service and device pairs are stored in the context information of the PN. A Service may be a composite service which looks up other services in the Service Registry 116, executes them and aggregates the results. A constituent service of a composite service may be a service provided by a service provider or a service provided by a PN.

Each PNE cluster 92 has a (and, according to some example embodiments, only one) PNE Cluster Gateway 30 which collects information from the devices 10 in the cluster, such as statuses, service information and event occurrences, and forwards this information to the Context Management function. The Service Management function receives requests for services provided by the devices in the cluster or the PNE cluster gateway itself, dispatches the requests and collects the results to be returned to the Service Requesters 122.

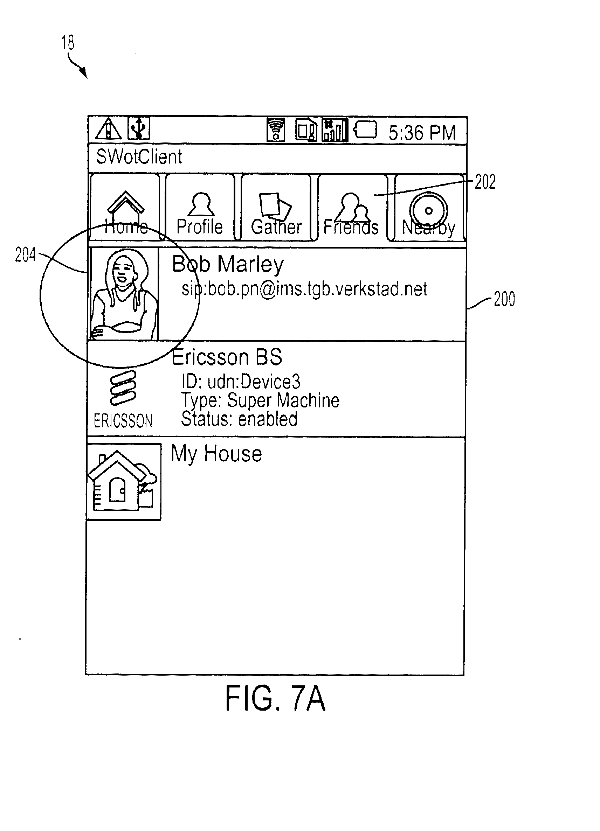

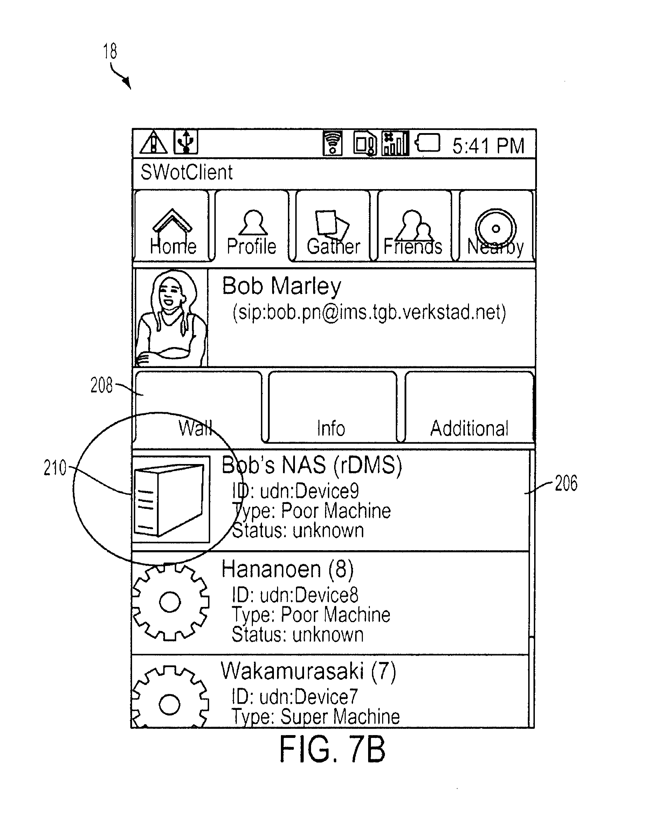

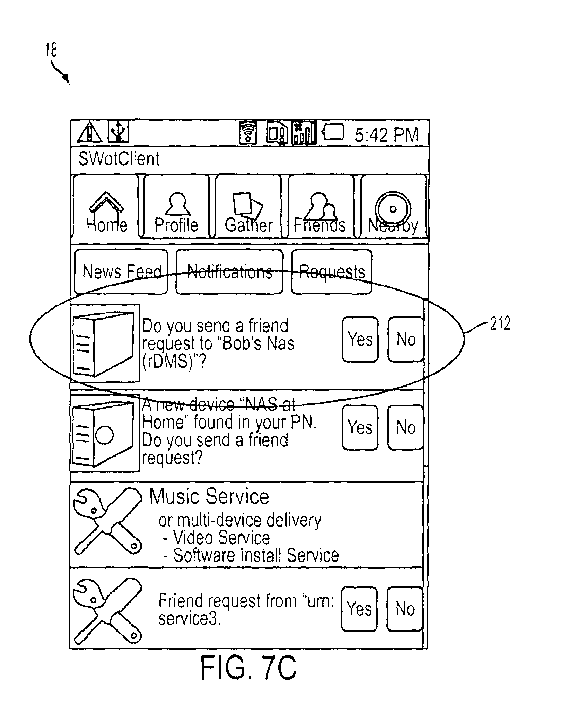

Using the architecture described above with respect to Figures 4-6, the aforedescribed management of networked object using social mapping principles can be implemented. Another example of such interactivity will now be described with respect to the user interface screens associated with a user interface 18 shown in Figures 7(a)-7(c). Starting with user interface screen 200 in Figure 7(a), a user 16 (Alice) of a PN 90 can see another user 16 (Bob) in her friend list (displayed by actuating Friends tab 202) because Bob and Alice are mutual friends. By clicking on Bob's icon 204, Alice can further check Bob's networked object information as shown in Figure 7(b). Therein, an entry 206 associated with Bob's NAS appears in the wall 208 since devices and services owned by Bob which have been designated by Bob as having an "open" setting can be seen by his friends, hence Alice can see Bob's NAS on the wall 208. By clicking on (or otherwise selecting) the icon 210 associated with Bob's NAS, Alice is prompted by the SWoT UI to be friends with Bob's NAS as seen in Figure 7(c). Alice is guided to the notification tab under the home page, and sees that she receives a notification 212 saying "Do you want to send a friend request to "Bob's NAS"? According to this example, suppose that Alice selects "Yes" as she is interested in being able to access the device, e.g., to enable her to access Bob's NAS to search for interesting media content. This message will then be relayed to the relation management function 22 to establish the friend relationship between Alice and Bob's NAS device as described above. Alternatively, an explicit request by Alice to access Bob's NAS could be treated as an implicit request to establish a friend relationship with Bob's NAS, which could then be accepted or rejected by Bob.

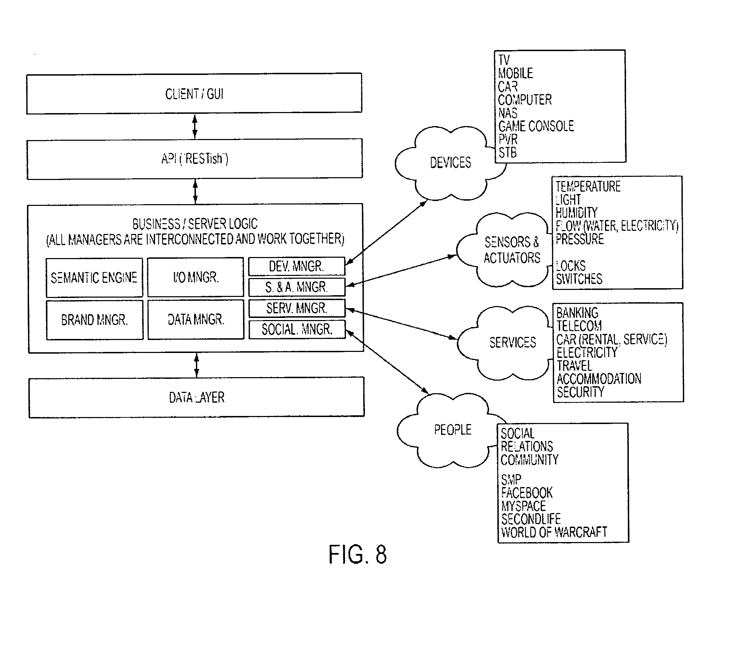

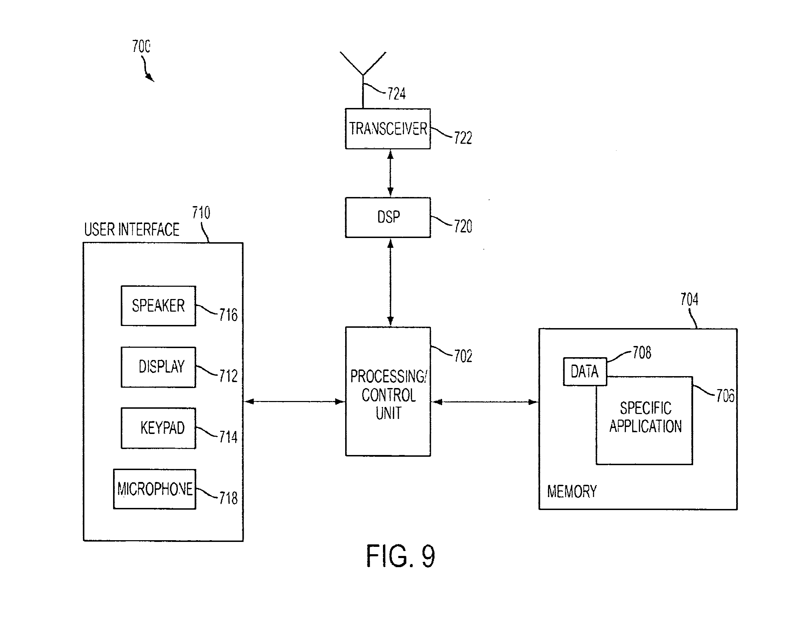

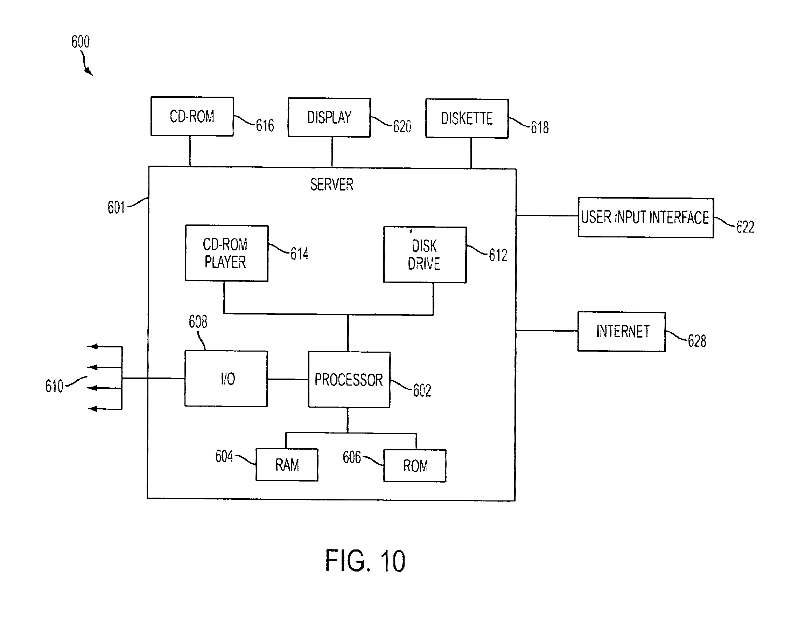

Figure 8 depicts another high level view of architectures associated with managing networked objects using social mapping principles according to example embodiments, including a number of examples of devices, sensors and actuators, services and people that may be associated with such management systems and methods. From the foregoing description, it will be appreciated that devices and servers are involved in implementing such systems. By way of example, rather than limitation, an example of a (mobile) device 700 and a server 600 will now be described with respect to Figures 9 and 10, respectively.

Starting with Figure 9, an example networked object or terminal device which runs user interface 18 can be a mobile device such as the example mobile computing arrangement 700 which may include a processing/control unit 702, such as a microprocessor, reduced instruction set computer (RISC), or other central processing module. The processing unit 702 need not be a single device, and may include one or more processors. For example, the processing unit 702 may include a master processor and associated slave processors coupled to communicate with the master processor. The processing unit 702 may control the basic functions of the networked object or mobile terminal as dictated by programs available in the storage/memory 704. Thus, the processing unit 702 may execute the functions described above to, e.g., enable friend devices to communicate with one another. More particularly, the storage/memory 704 may include an operating system and program modules for carrying out functions and applications on the mobile terminal. For example, the program storage may include one or more of read-only memory (ROM), flash ROM, programmable and/or erasable ROM, random access memory (RAM), subscriber interface module (SIM), wireless interface module (WIM), smart card, or other removable memory device, etc. The program modules and associated features may also be transmitted to the mobile computing arrangement 700 via data signals, such as being downloaded electronically via a network, such as the Internet.

One of the programs that may be stored in the storage/memory 704 is a specific program 706. As previously described, the specific program 706 may be a client application which interacts with the system 12 to, for example, receive and authorize friend requests, send task requests and receive task results, or display information about networked objects 10 with which the user has a friend, best friend or owner relationship. The program 706 and associated features may be implemented in software and/or firmware operable by way of the processor 702. The program storage/memory 704 may also be used to store data 708, such as the various authentication rules, or other data associated with the present example embodiments. In one example embodiment, the programs 706 and data 708 are stored in non-volatile electrically-erasable, programmable ROM (EEPROM), flash ROM, etc. so that the information is not lost upon power down of the mobile terminal 700.

The processor 702 may also be coupled to user interface 710 elements associated with the mobile terminal. The user interface 710 of the mobile terminal may include, for example, a display 712 such as a liquid crystal display, a keypad 714, speaker 716, and a microphone 718. These and other user interface components are coupled to the processor 702 as is known in the art. The keypad 714 may include alpha-numeric keys for performing a variety of functions, including dialing numbers and executing operations assigned to one or more keys. Alternatively, other user interface mechanisms may be employed, such as voice commands, switches, touch pad/screen, graphical user interface using a pointing device, trackball, joystick, or any other user interface mechanism.

The mobile computing arrangement 700 may also include a digital signal processor (DSP) 720. The DSP 720 may perform a variety of functions, including analog-to-digital (A/D) conversion, digital-to-analog (D/A) conversion, speech coding/decoding, encryption/decryption, error detection and correction, bit stream translation, filtering, etc. The transceiver 722, generally coupled to an antenna 724, may transmit and receive the radio signals associated with a wireless device.

The mobile computing arrangement 700 of Figure 9 is provided as a representative example of a computing environment in which the principles of the present example embodiments may be applied. From the description provided herein, those skilled in the art will appreciate that the present invention is equally applicable in a variety of other currently known and future mobile and fixed computing environments. For example, the specific application 706 and associated features, and data 708, may be stored in a variety of manners, may be operable on a variety of processing devices, and may be operable in mobile devices having additional, fewer, or different supporting circuitry and user interface mechanisms. It is noted that the principles of the present example embodiments are equally applicable to devices which are non-mobile terminals, i.e., landline computing systems.

An example of a representative computing system capable of carrying out operations in accordance with the servers or gateways of the example embodiments is illustrated in Figure 10. Hardware, firmware, software or a combination thereof may be used to perform the various steps and operations described herein. The computing structure 600 of Figure 10 is an example computing structure that may be used in connection with such a system.

The example computing arrangement 600 suitable for performing the activities described in the example embodiments may include server 601, which may correspond to any of servers or gateways described herein, e.g., PN AS 46 or gateway 30. Such a server 601 may include a central processor (CPU) 602 coupled to a random access memory (RAM) 604 and to a read-only memory (ROM) 606. The ROM 606 may also be other types of storage media to store programs, such as programmable ROM (PROM), erasable PROM (EPROM), etc. The processor 602 may communicate with other internal and external components through input/output (I/O) circuitry 608 and bussing 610, to provide control signals and the like. The processor 602 carries out a variety of functions as is known in the art, as dictated by software and/or firmware instructions. For example, when computing arrangement 600 is operating as a PN Cluster gateway 30, the I/O circuitry 608 and bussing 610 can provide at least two network connections, i.e., one for the PN Cluster network, and one for the wide-area network.

The server 601 may also include one or more data storage devices, including hard and floppy disk drives 612, CD-ROM drives 614, and other hardware capable of reading and/or storing information such as DVD, etc. In one embodiment, software for carrying out the above discussed steps, e.g., to establish friend relations between networked objects, may be stored and distributed on a CD-ROM 616, diskette 618 or other form of media capable of portably storing information. These storage media may be inserted into, and read by, devices such as the CD-ROM drive 614, the disk drive 612, etc. The server 601 may be coupled to a display 620, which may be any type of known display or presentation screen, such as LCD displays, plasma display, cathode ray tubes (CRT), etc. A user input interface 622 is provided, including one or more user interface mechanisms such as a mouse, keyboard, microphone, touch pad, touch screen, voice-recognition system, etc.

The server 601 may be coupled to other computing devices, such as the landline and/or wireless terminals and associated watcher applications, via a network. The server may be part of a larger network configuration as in a global area network (GAN) such as the Internet 628, which allows ultimate connection to the entities described above.

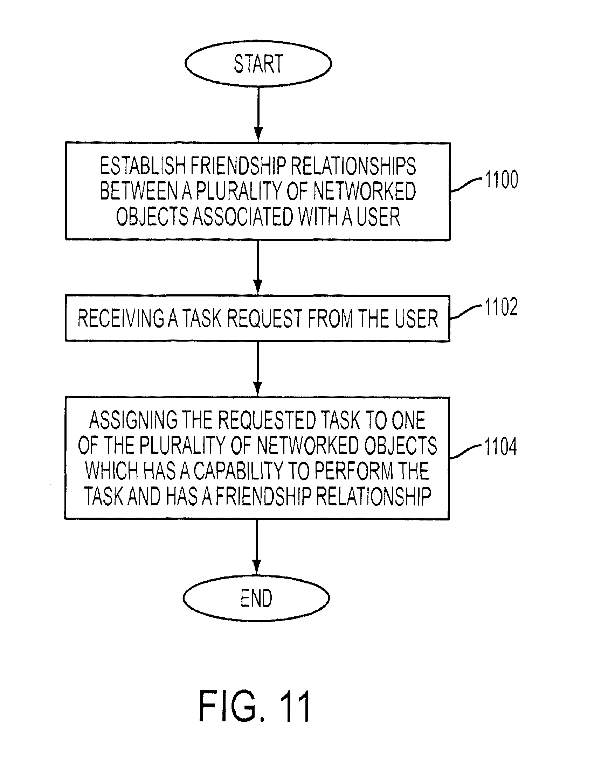

Although the features and elements of the present example embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a general purpose computer or a processor. For example, Figure 11 depicts a flowchart which illustrates a method of managing networked objects according to an example embodiment. Therein, at step 1100, friendship relationships are established between a plurality of networked objects, each of the plurality of networked objects being associated with a user. The network management system receives a task request at step 1102. In response, the network management system assigns the requested task to one of the plurality of networked objects which has a capability to perform the requested task and which has an established friendship relationship with the user.

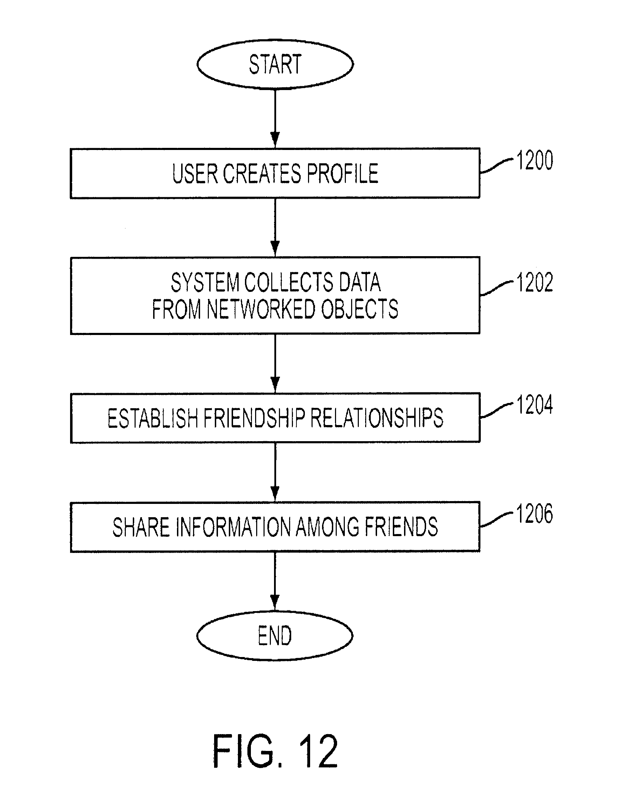

According to another example embodiment, generalized systems and methods for networking objects using social mapping principles can operate as shown in the flowchart of Figure 12. Therein, at step 1200, a user joins and installs the service and creates a profile that reflects the identity of the user. Data for the user profiles could be imported or aggregated from existing user profiles of known web-based social network services such as Facebook, MySpace, and LinkedIn, or from the users' data connected to a subscription with an operator. Groups of users could be created among users living within the same household, or other attributes that the user has decided to share. User profiles can be made visible and linked with the profiles of other users of a group if the users wish to do so.

At step 1202, the system collects data from objects which are presently networked together and unique entity profiles for each device are created (based on, for example, the kind of device, its functionality, brand characteristics, location, etc.). The users connect their own system entity to system entities of networked objects, for example by creating a connection through the client application user interface or physically bringing together NFC/RFID enabled devices. The objects' system entities connect to each other's profiles, i.e., establish a level of friendship relation as described above, either automatically (based on the kind of device, its functionality, brand, location, etc.) or as managed by a user (authorized to do so and that has connected his/her user profile to the device) at step 1204.

Once System Entity A has established a friendship relation with System Entity B, other system entities that System Entity A already has a relation to can also establish a relation with System Entity B, and vice versa. For example, suppose that the system sends data about the new relation to already connected system entities associated with both A and B, optionally filtered by criteria such as device capabilities, brand, location etc. The new system entity (A or B in this example) can respond to such queries e.g. by auto-confirmation, thereby establishing a relation to the existing devices. Alternatively, all such connections can be manually managed in the user's client application, or the user could define a set of rules for auto-confirmation.

As mentioned above, such relations may have a temporal characteristic or parameter. For example, temporary relations to system entities such as those associated with borrowed or rented networked objects, or guest-users can be set up for a specific period of time, alternatively based on the proximity of another specific user, within a certain area, along a certain route or other criteria. The temporary connected entities will then only be available when fulfilling the pre-defined criteria mentioned above, and the system entity is otherwise inaccessible, although it may still be visible to the temporary connected system entities. A temporary connection can be approved- or initiated by the system or by the owner/provider/administrator of the system entity that will have a temporal connection.

Connected users and objects' system entities according to example embodiments may have reciprocal presence in each other's profiles. Information about status, logged activities, other connections, mutual connections etc. can be made available for connected users and system entities. The user, or a networked object's system entity, can for example send data or a notification that calls for a certain response, to the system or to a specific system entity or group of system entities.

Each system entity can be made aware of its connected system entities profiles, including but not limited to data about their functionality, dependencies, current status as well as previous and future planned (timer set) events, capabilities, mandate and responsibilities. This enables functionality and interaction such as that exemplified by the TV and the video recorder scenario described above. Moreover, the kind of subcontracting, functional outsourcing or 'favors' described in that TV and video recorder example could, in some cases, be executed automatically between the system entities of objects, without the interaction of a user. These activities are collectively referred to in Figure 12 by step 1206 which indicates that all of this type of information can be shared among those networked objects 10 which are, at least, friends with one another.

As yet another example of this type of architecture and functionality according to an example embodiment, consider a sensor cluster represented in the system as a plant's system entity sends data to the system about its status, for example that it the temperature is high and humidity very low. The system could interpret this status as not ideal for the plant, and the system could notify the system entity of the blinds in the window where the plant is located that it could potentially provide a solution to this reported problem by closing, creating shadow for the plant. After closing, the blinds will send a notification (as a threaded response to the plant's status) that states that it has attempted to solve the plant's problem. The user can monitor, participate or intervene with the interaction between the system entities via the user interface.

From the foregoing, it will be apparent that example embodiments provide intuitive, understandable and unified interaction with networked devices and services as well as between their users, owners, manufacturers, vendors or providers. Such embodiments support and enhance the users' conceptual understanding of a digital network, as well as provide easy access to each device and service via a user interface. Example embodiments greatly ease the configuration, monitoring, maintenance and management of networked products and services and can also help make home automation more intelligent and transparent, but at the same time understandable and non-intrusive for the users.

The ease of use, accessibility and understandable concept according to these example embodiments could lower the threshold for the users to buy or add services to the system. This could create a new platform for delivering digital as well as physical services of all kinds. The system also opens up new opportunities for branding as it provides a way for manufacturers of products and services to manage and customize the characteristics that define the system entities that represent each product they manufacture in the system. Manufacturers can submit data to the system that for example define what kind of expression and behavior system entities of a certain product should have, and also what kind of relationship it should have with other system entities that are related to or affiliated via the brand of their manufacturers.

Numerous embodiments have been explained above that apply social mapping principles to manage resource nodes which are connected to one or more networks. Resource nodes are also referred to herein as "networked objects." Some further embodiments described below are directed to managing interaction flows between resource nodes, and can include generating recommendations for interaction flows between resource nodes that can be accepted or declined by users.

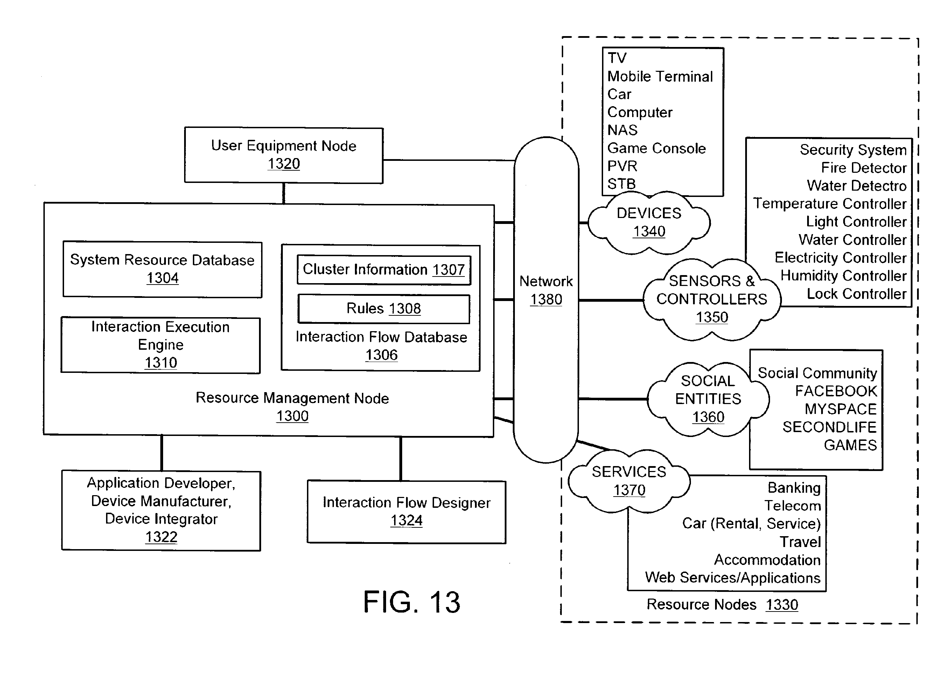

Figure 13 depicts another system architecture that includes a resource management node 1300 that manages a plurality of resource nodes 1330 connected to at least one network 1380 (e.g., a personal network (PN), a public network (Internet), etc.) using operations and methods according to some embodiments. Referring to Figure 13, the resource nodes 1330 can include, but are not limited to, electronic devices 1340, electronic sensors and controllers 1350, electronic social entities 1360, and electronic services 1370. Example electronic devices 1340 can include televisions, mobile communication terminals, cars, computers, network attached storage (NAS), game consoles, personal video recorders (PVRs), and set-top boxes (STBs). Example electronic sensors and controllers 1350 can include security systems, smoke/fire detectors, water detectors, temperature controllers, light controllers, water controllers, electricity controllers, humidity controllers, and/or door lock controllers. Example electronic social entities 1360 can include computer systems that provide social community interactions between users, such as Facebook, MySpace, and LinkedIn, SecondLife, and on-line gaming applications, and may include location based social networking services, such as Foursquare, Gowalla, and Google Latitude. Example electronic services 1370 can include computer systems that provide banking services, telecommunication services, car rental services, car repair services, travel services, and accommodation services. Other types of electronic service 1370 can include web services and application delivery services. Example web services can include media services, such as Spotify, iTunes, YouTube, and various remote control applications and information browser applications.

As will be explained in further detail below, the resource management node 1300 is configured to manage communication and control interactions between users and the resource nodes 1330, and between the resource nodes 1330 themselves. The communication and control interactions are carried-out through data flows (e.g., messages, streaming data, discrete signaling, etc.). In accordance with some embodiments, the resource management node 1300 establishes clusters of the resource nodes 1330, and selectively causes the user equipment node to prioritize handling of data flows for resource nodes in a particular one of the clusters.

Users may operate one or more user equipment nodes 1320 to provide instructions to, and receive information from, the resource management node 1300. The user equipment node 1320 may correspond to the above-described user interface 18 of Figure 1, the mobile device 700 of Figure 9, and/or any other user interface equipment that can be operated to provide instructions to the resource management node 1300 and/or the resource nodes 1330, and/or to receive and display or otherwise communicate information from the resource management node 1300 and/or one or more of the resource nodes 1330 to a user.

The resource management node 1300 can include a system resource database 1304, an interaction flow database 1306, and an interaction execution engine 1310. Although separate functional elements have been illustrated within the resource management node 1300 for ease of explanation, one or more of the functional elements may be combined or may be split into two or more functional elements. Moreover, some or all of the functionality that is described as residing within one or more elements of the resource management node 1300 may alternatively or additionally reside within one or more of the resource nodes 1330 and/or within other components of the system. Accordingly, functional components of the resource management node 1300 can be separate from, and communicatively connected to, the resource nodes 1330 and/or some of the function components may reside within one or more of the resource nodes 1330.

As used herein, the term database is used in a general sense to refer to a collection of digital data having known relational structures. Example databases include low complexity data lists and higher complexity object-oriented relational data structures.

### Example System of Networked Resource Nodes

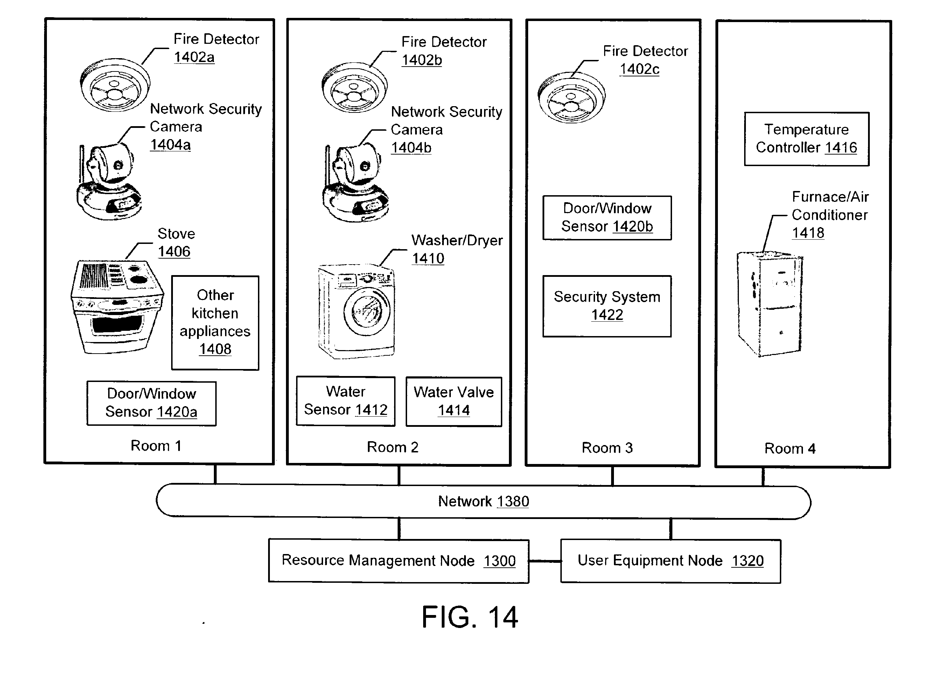

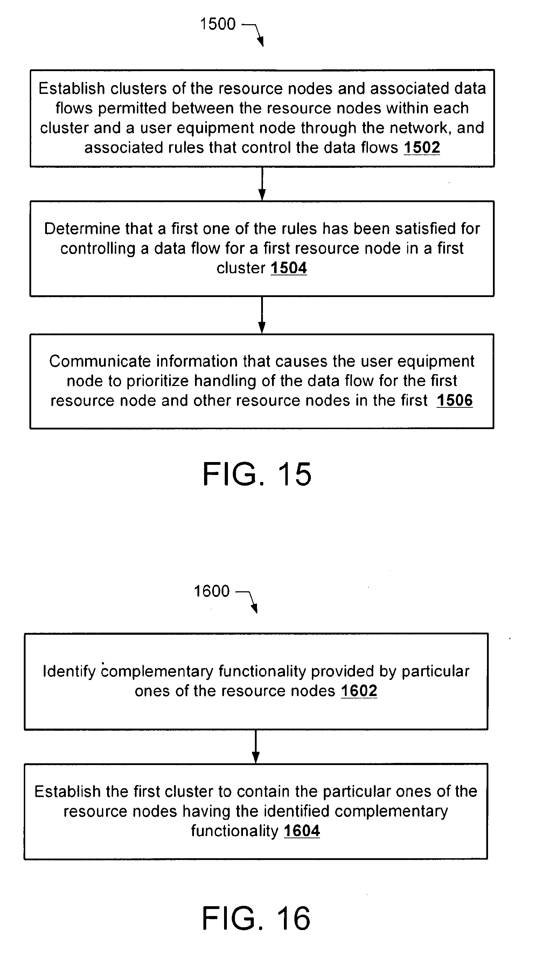

Various operations and methods of the resource management node 1300 are explained below in the context of managing certain types of resource nodes in a home or other building environment as shown by the system of Figure 14. The system of Figure 14 is provided to facilitate an understanding of some embodiments, but is not limiting as to the operation and scope of those embodiments or, indeed, other embodiments of the invention. The resource management node 1300 can be used to manage any type of resource nodes in any type of environment. More detailed operations and methods according to these and other embodiments are depicted by the flowcharts of Figure 15-24.

Referring to Figure 14, the system includes the resource management node 1300 which is configured to manage various resource nodes that are located in different rooms (Room 1 - Room 4) of a home, commercial building, etc, and networked together by one or more wired and/or wireless networks 1380. In the illustrative example, the resource nodes included in Room 1 (e.g. kitchen) may include a fire detector 1402a, a network security camera 1404a, a stove 1406, other kitchen appliances 1408, and/or a door/window open sensor 1420a. The resource nodes included in Room 2 (e.g. laundry room) may include a fire detector 1402b, a network security camera 1404b, a washer/dryer 1410, a water sensor 1412, and a water control valve that controls the flow of water to the washer/dryer 1410 and/or other water usage components. The resource nodes included in Room 3 (e.g. bedroom) may include a fire detector 1403c, a door/window open sensor 1420a, and/or a security system 1422. The resource nodes included in Room 4 (e.g. hallway and utility closet) may include a temperature controller 1416 and a furnace/air conditioner 1418.

In accordance with some embodiments, the resource management node 1300 establishes clusters of the resource nodes 1330, and selectively causes the user equipment node to prioritize handling of data flows for resource nodes in a selected cluster. Example operation and methods 1500 performed by the resource management node 1300 are illustrated in Figure 15. The resource management node 1300 is configured to establish (block 1502) clusters of the resource nodes 1330 and associated data flows that are permitted between the resource nodes 1330 within each cluster and a user equipment node through the network 1380, and associated rules that control the data flows. The resource management node 1300 determines (block 1504) that a first one of the rules has been satisfied for controlling a data flow for a first resource node in a first cluster. The resource management node 1300 responds to the first rule being satisfied by communicating (block 1506) information to the user equipment node 1320 that causes the user equipment node 1320 to prioritize handling of the data flow for the first resource node and other resource nodes in the first cluster in response to the first rule being satisfied.

### Establishing Clusters of Resource Nodes

Various example operations and methods 1600, 1700, 1800, 1900, 2000 that may be performed by the resource management node 1300 to establish clusters of the resource nodes 1330 are illustrated in Figures 16-20. To determine which resource nodes 1330 to include in a cluster, the resource management node 1300 may be configured to identify (block 1602, Fig. 16) complementary functionality that is provided by particular ones of the resource nodes 1330, and to establish (block 1604, Fig. 16) a cluster to contain the particular ones of the resource nodes having the identified complementary functionality. The resource management node 1300 may identify the complementary functionality provided by particular ones of the resource nodes 1330 based on metadata or other information stored in the system resource database 1304.

This metadata may identify operational capabilities, data input/output characteristics, control capabilities/characteristics, and/or location (e.g., geographic location, building floor/room/other location) of particular ones of the resource nodes 1330, and/or may identify communication (e.g., network 1380) addresses for the resource nodes 1330. The complementary functionality that is identifiable can therefore include, but is not limited to, identifying information and/or control functions that can be generated by the resource management node 1300 and/or the user equipment node 1320 combining data from two or more resource nodes, identifying resource nodes that can receive and operate using and/or be controlled using data from one or more other resource nodes (e.g., resource nodes having compatible and functionally complementary data input/output interfaces), identifying resource nodes that are located sufficiently close to one another to be able to provide information that is relevant to events that are sensed by one of those resource nodes or rules satisfied by one of those resource nodes.

Information in the system resource database 1304 may be supplied by the resource nodes 1330 themselves, such as during an initialization process when a resource node is first connected to the resource management node 1300 via the network 1380. The information may alternatively or additionally be supplied by other entities 1322, such as application developers, device manufacturers, and/or device integrators.

As part of the process for establishing clusters, the resource management node 1300 can generate and store cluster information 1307 and associated rules 1308 in the interaction flow database 1306. The cluster information 1307 identifies clusters and which resource nodes 1330 are members of which clusters. The rules 1308 identify one or more responsive actions that are to be taken by one or more particular resource nodes 1330 when a triggering event occurs (e.g. a resource node senses a defined event, enters a defined operational state, and/or receives defined data from another resource node/user equipment node).

### Example Use: Clustering of Resources for Response to Smoke/Fire

Further example operations and methods are explained with continuing reference to the example system of Figure 14. The resource management node 1300 can identify that the some of the resource nodes are more prone to causing smoke/fire damage to a home/building and may be controlled to avoid or reduce damage from smoke/fire, while other resource nodes can be used to detect or confirm the existence of smoke/fire. A cluster can be established that includes these resource nodes to allow data flows to occur between the resource nodes and the user equipment node 1320, and/or between the resource nodes themselves. The resource management node 1300 can further define associated rules 1308 that control these data flows.

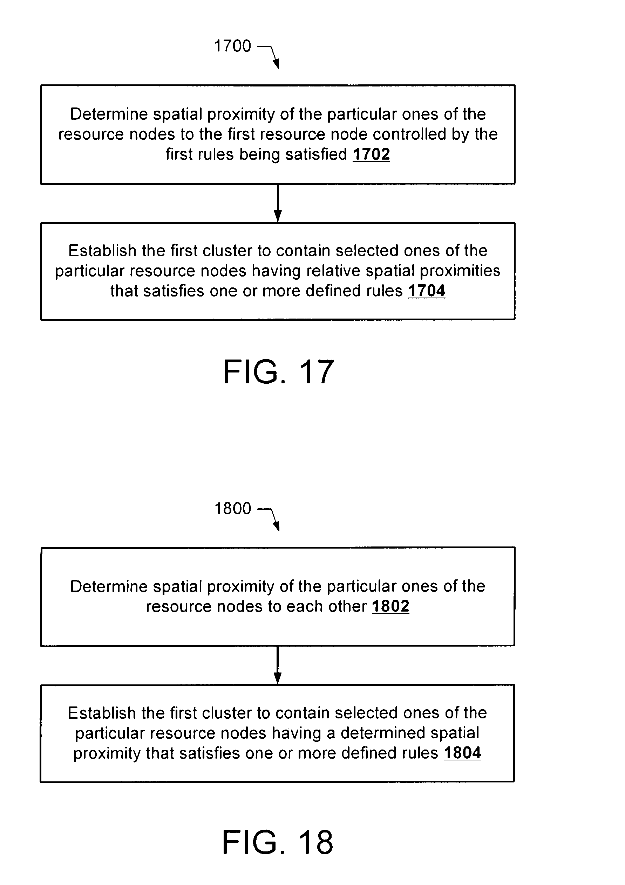

Figure 17 depicts example operations and methods 1700 by the resource management node 1300 to identify complementary functionality provided by particular ones of the resource nodes based on determining (block 1702) their spatial proximity to the one of the resource nodes that has detected/triggered a defined event. A cluster is established (block 1704) to contain selected ones of the particular resource nodes having relative spatial proximities that satisfy one or more defined rules.

Resource nodes may additionally or alternatively be clustered based on their proximity relative to each other, without regard to which, if any, resource node has detected/triggered a defined event. Referring to the operations and methods 1800 of Figure 18, the resource management node 1300 can identify complementary functionality provided by particular ones of the resource nodes based on determining (block 1802) spatial proximity of the particular ones of the resource nodes to each other. A cluster is established (block 1804) to contain selected ones of the particular resource nodes having relative spatial proximities that satisfy one or more defined rules.

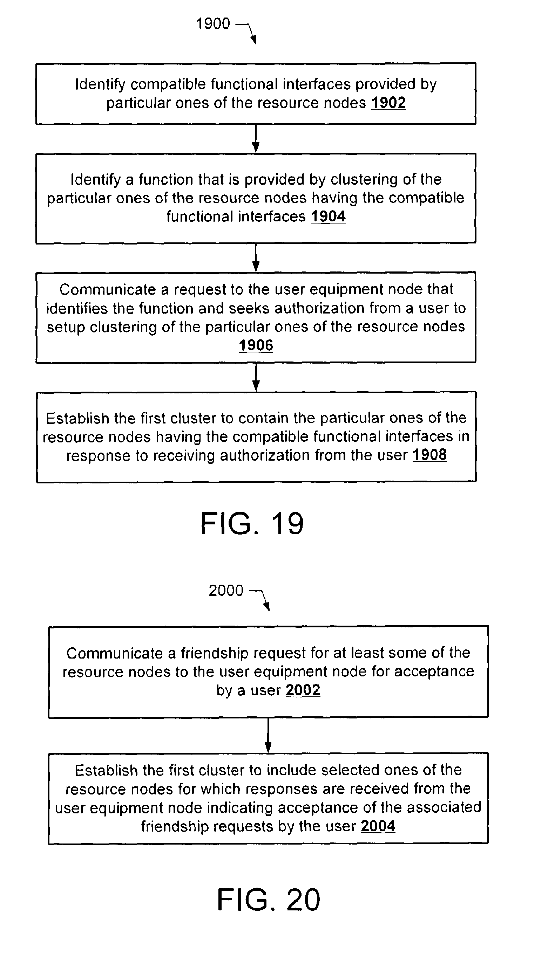

Further operations and methods 1900 for identifying complementary functionality provided by particular ones of the resource nodes are shown in Figure 19. The resource management node 1300 can use information from the system resource database 1304 to identify (block 1902) compatible functional interfaces provided by particular ones of the resource nodes. The resource management node 1300 identifies (block 1904) a function that is provided by clustering of the particular ones of the resource nodes having the compatible functional interfaces. The resource management node 1300 communicates (block 1906) a request to the user equipment node 1320 that identifies the function and seeks authorization from a user to setup clustering of the particular ones of the resource nodes. The resource management node 1300 establishes (block 1908) a cluster containing the particular ones of the resource nodes having the compatible functional interfaces in response to receiving authorization from the user.

For example, the network security camera 1404a, the stove 1406, and the other kitchen appliances 1408 can be clustered together in a first designated cluster because of their proximity within the same Room 1 as the fire detector 1402a, and because the resource management node 1300 further determines that they have complementary functionality. The security camera 1404a can be used to observe Room 1 to determine the presence/absence of smoke/fire. The stove 1406 and other kitchen appliances 1408 can be a source of smoke/fire, and are capable of being controlled through the network 1380 to turn power off and/or change operation to reduce risk of smoke/fire.

In response to the fire detector 1402a detecting smoke/fire, an alert data flow (e.g. alert message) is established from the fire detector 1402 through the network 1382 to the resource management node 1300, which may forward the alert data flow to the user equipment node 1320 with information that causes the user equipment node 1320 to prioritize handling of the alert data flow.

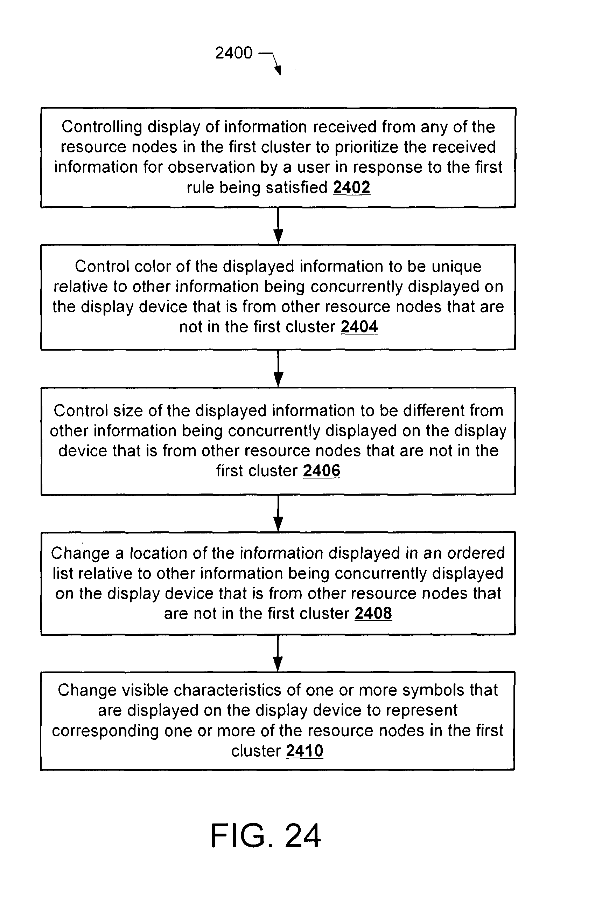

Referring to the example operations and methods 2400 of Figure 24, the resource management node 1300 may control the user equipment node's 1320 to display on a display device the information received from the alert data flow to prioritize the received information for observation by a user. The color of the displayed information may be controlled (block 2402) to be unique relative to other information being concurrently displayed that is from other resource nodes that are not in the first cluster. The size of the displayed information may be controlled (block 2406) to be different from other information being concurrently displayed on the display device that is from other resource nodes that are not in the first cluster. A location of the information displayed in an ordered list may be changed (block 2408) relative to other information being concurrently displayed on the display device that is from other resource nodes that are not in the first cluster. Visible characteristics of one or more symbols that are displayed on the display device may be changed (block 2410) to represent the fire detector 1402.

The resource management node 1300 responds to the alert data flow and one of the rules 1308, which defines one or more responsive actions to be taken, by initiating a video data flow from the network security camera 1404a to the user equipment node 1320 to allow the user to observe Room 1 to confirm the presence/absence of smoke/fire. The resource management node 1300 may send a video authorization message to the user equipment node 1320 requesting the user's authorization to initiate the video data flow, or may initiate the video data flow without seeking authorization beforehand. Because the security camera 1404a is in the same first cluster as the fire detector 1402, the resource management node 1300 controls the user equipment node 1320 to prioritize (e.g. one or more operations of Figure 24) handling of the video authorization message (if used) and the video data flow relative to other information that is being displayed, or otherwise operated on, by the user equipment node 1320 which relates to another resource node that is not in the first cluster. The resource management node 1300 may determine from the system resource database 1304 that the security camera 1404a supports pan/tilt/zoom operations and, responsive thereto, can display user selectable options for the user to select to control, via the established data flow, one or more of those camera operations.

The resource management node 1300 determines from the system resource database 1304 that the stove 1406 and the various other kitchen appliances 1408 are controllable via the network 1380. In further response to the alert data flow and another one of the rules 1308, which defines one or more responsive actions to be taken, the resource management node 1300 can establish a control data flow between the user equipment node 1320 and the stove 1406 and various other kitchen appliances 1408. The resource management node 1300 may communicate information that separately identifies status of the stove 1406 and the various other kitchen appliances 1408 (e.g., powered-on, operational fault detected, temperature or other sensor readings, etc.) to the user equipment node 1320, and may further control the user equipment node 1320 to provide prioritized handling (e.g. one or more operations of Figure 24) of the information for display and/or generation of another alert (e.g. audible and/or vibration) to the user. The user may separately control the stove 1406 and the various other kitchen appliances 1408, either through a direct data flow or indirect data flow through the resource management node 1300, to toggle power off, turn down a heat setting, reinitialize/reset an operational state or change operational states, etc.

In some further embodiments, the resource management node 1300 may identify further complementary functionality of resource nodes in the first cluster, such as additional complementary functionality that can be provided by the two other fire detectors 1402b-c and the network security camera 1404b (which can also operate to detect/confirm the presence of smoke/fire) located in adjacent Rooms 2 and 3, the furnace/air conditioner 1418 (which can also be a source of smoke/fire) and the temperature controller 1416 (which can be used to turn-off/control the furnace) located in adjacent Room 4. Adding these resource nodes to the first cluster defined in the cluster information 1307, the resource management node 1300 and/or an interaction flow designer 1324 can then define further rules that are triggered to control data flows between various of the resource nodes and the user equipment node 1320 in response to defined rules being satisfied.

For example, in response to the alert data flow being triggered from the fire detector 1402a, the resource management node 1300 can initiate a video data flow from the network security camera 1404b and a status data flow from the fire detectors 1402b-c to the user equipment node 1320 so that a user can determine whether smoke/fire is detected or observed in the other Rooms 2 and 3. The resource management node 1300 can also control the user equipment node 1320 to prioritize its handling of those data flows, such as by one or more of the operations of Figure 24.

### Handling of Data Flows with Resource Nodes in Same Cluster

The resource management node 1300 may be configured to cause the user equipment node 1320 to handle data flows from any resource nodes within a same group with the same or similar prioritized level of handling. For example, when the fire detector 1402a detects smoke and generates the alert data flow, the resource management node 1300 may respond by causing the user equipment node 1320 to prioritize display of information received through data flows associated with other resource nodes that are in the same first cluster for observation by a user. Thus, status data flows from each of the fire detectors 1402a-c and the security cameras 1404a-b may be displayed with: 1) unique color(s) relative to other information being concurrently displayed that is from other resource nodes that are not in the first cluster; 2) size(s) different from other information being concurrently displayed on the display device that is from other resource nodes that are not in the first cluster; 3) location in an ordered list that is more observable by a user relative to other information being concurrently displayed on the display device that is from other resource nodes that are not in the first cluster; and/or 4) change visible characteristics of one or more symbols that are displayed on the display device to represent the respective resource nodes in the first cluster.

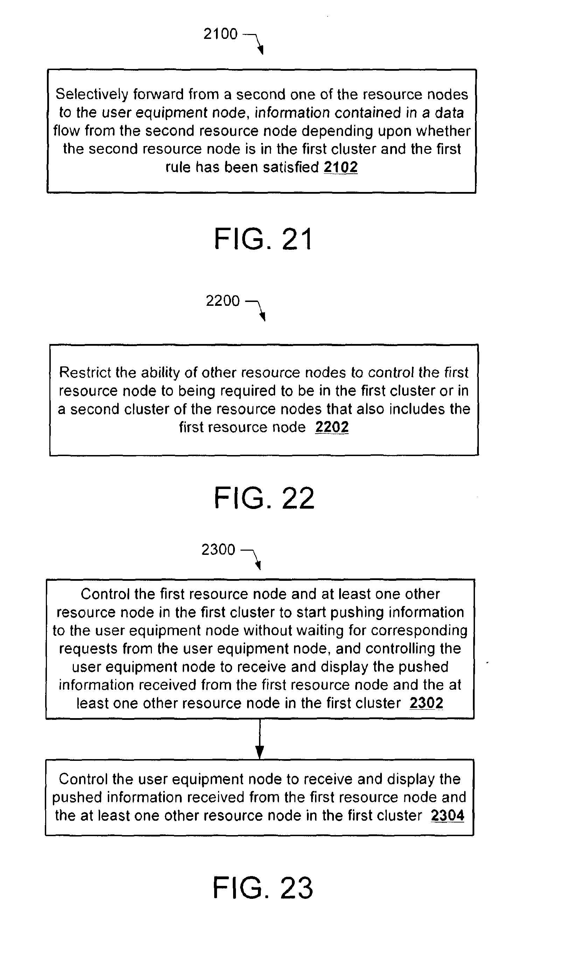

The resource management node 1300 may be configured to perform context sensitive filtering of what data flows associated with resource nodes are provided to the user equipment node 1320, depending upon which, if any, cluster the respective resource nodes are members. More particularly, referring to the operations and methods 2100 of Figure 21, the resource management node 1300 may selectively forward (block 2102) information contained in a data flow from a particular resource node to the user equipment node 1320 depending upon whether the particular resource node is in a cluster for which a rule has been satisfied. For example, when the fire detector 1402a detects smoke, the resource management node 1300 may then start forwarding information from any of the other resource nodes (e.g., cameras 1404a-b, stove 1406, fire detectors 1402b-c, furnace 1418) in the same first cluster as the fire detector 1402a, while not forwarding information from resource nodes that are in a different cluster for which no forwarding rules as been satisfied (e.g., washer/dryer 1410).

In a similar manner, the resource management node 1300 may be configured according to the operations and methods 2200 of Figure 22 to restrict (block 2202) the ability of resource nodes to control a resource node within a particular cluster to being required to be in same cluster. For example, the fire detectors 1402a-c may be allowed to trigger the security cameras 1404a-b within the same cluster to begin streaming video to the user equipment node 1320 (passing through or under the control of the resource management node 1300). In contrast, the resource management node 1300 may not allow any of the fire detectors 1402a-c to control the washer/dryer 1410, the water sensor 1412, and the water valve 1414 which are members of a different established cluster than the fire detectors 1402a-c.

According to some further operations and methods 2300 of Figure 23, when the user equipment node 1320 is controlled to prioritize handling of a data flow for one or more resource nodes in the first cluster, the resource management node 1300 may control (block 2302) one or more of the resource nodes in the first cluster to start pushing information to the user equipment node 1320 without waiting for corresponding requests from the user equipment node 1320. The user equipment node 1320 can be similarly controlled (block 2304) to receive and display the pushed information received from the one or more resource nodes in the first cluster.

For example, in response to the fire detector 1402a sensing smoke, the resource management node 1300 can trigger the security cameras 1404a-b to begin streaming video to the user equipment node 1320. Prior to the fire detector 1402a sensing smoke, the security cameras 1404a-b function to only stream video in response to a defined request from the user equipment node 1320. The stove 1406, the other kitchen appliances 1408, the temperature controller 1416, and the furnace/air conditioner 1418 may be similarly controlled to push status, sensor measurements, and/or other information to the user equipment node in response to the fire detector 1402a sensing smoke or another defined event being detected by or occurring with any other resource node that is in the same cluster as defined by one or more of the rules 1308.

Resource nodes may be clustered based on friendship relationships that are established between the resource nodes. Referring to the operations and methods 2000 of Figure 20, the resource management node 1300 communicates a friendship request for at least some of the resource nodes to the user equipment node 1320 for acceptance by a user. A cluster is established for selected ones of the resource nodes for which responses are received from the user equipment node 1320 indicating acceptance of the associated friendship requests by the user.

By making the relationship between resource nodes, as well as relationships between resource nodes and users, analogous to, e.g., social mapping principles like "friendship" (i.e. a notion of trust or ownership relationship and access control), example embodiments make interaction flows through resource node intuitive to understand and manage by users. Example embodiments utilize a recognizable resemblance to a social network in order to enable users to form a holistic mental model of potentially large numbers of networked resource nodes with simultaneous interconnections and interrelations with each other.

### Example Use: Clustering of Resources for Response to Water Leak and Security System

Further example operations and methods are explained with continuing reference to the example system of Figure 14.

The resource management node 1300 can identify that the water sensor 1412, the water valve 1414, the washer/dryer 1410, and the network security camera 1404b have complementary functionality and, responsive thereto, can establish a second cluster a second cluster including those resource nodes through information 1307 defined in the interaction flow database 1306. The resource management node 1300 can further define one or more rules 1308 that responds to the water sensor 1412 detecting water (e.g., on a floor of Room 2) by sending an alert message to the user equipment node 1320, initiating a video data flow from the network security camera 1404b to the user equipment node 1320 so that the user can observe Room 2 to confirm/diagnose the water leak, and/or initiating a status data flow from the washer/dryer 1410 to the user equipment node 1320 so that the user can determine whether the washer/dryer 1410 is presently operating and/or is reporting a faulty operation. The resource management node 1300 can further establish control data flows from the user equipment node 1320 to the washer/dryer 1410 and/or the water valve 1414 to allow the user to turn off and/or change and operational state of the washer/dryer 1410 and/or control the water valve 1414 to stop the flow of water.

The resource management node 1300 can further identify that the security system 1422, the door/window sensors 1420a-b, and the security cameras 1404a-b have complementary functionality and, responsive thereto, can establish the third cluster including those resource nodes through information 1307 defined in the interaction flow database 1306. The resource management node 1300 can further define one or more rules 1308 that responds to the door/window sensor 1420a/1420b detecting opening of a door/window by sending an alert message to the user equipment node 1320, and initiating a video data flow from the network security cameras 1404a-b to the user equipment node 1320 so that the user can observe Rooms 1 and 2 to confirm presence of a potential intruder. The resource management node 1300 can further establish control data flows from the user equipment node 1320 to the security camera 1404a-b to allow the user to control pan/tilt/zoom operations, and establish a control data flow to the security system 1422 to trigger an alarm and/or notification of authorities.

### Example Resource Management Node, Resource Node, or User Equipment Node

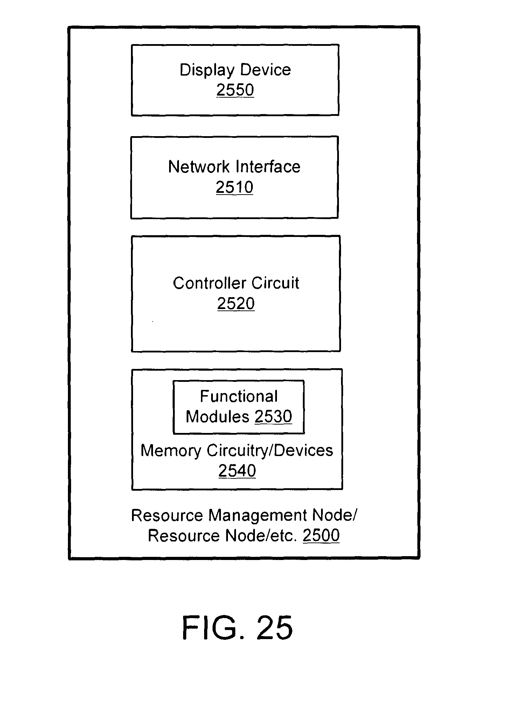

Figure 25 is a block diagram of example components that may be included in the resource management node 1300, one or more of the resource nodes 1330, the user equipment node 1320, and/or other components of the system of Figure 13 according to some embodiments. Referring to Figure 25, the node 2500 includes one or more network interfaces 2510 (e.g., wired and/or wireless interfaces (cellular, WLAN, Bluetooth, etc.)) for connection to the one or more networks 1380, a display device 2550, one or more controller circuits 2520, and memory circuitry/devices 2540 that contain functional modules 2730.

The controller circuit 2520 may include one or more data processing circuits, such as a general purpose and/or special purpose processor (e.g., microprocessor and/or digital signal processor). The controller circuit 2520 is configured to execute computer program instructions from the functional modules 2530 in the memory circuitry/devices 2540, described below as a computer readable medium, to perform some or all of the operations and methods that are described above for one or more of the embodiments, such as the embodiments of Figures 1-24.

### Further Definitions and Embodiments

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When a node is referred to as being "connected", "coupled", "responsive", or variants thereof to another node, it can be directly connected, coupled, or responsive to the other node or intervening nodes may be present. In contrast, when an node is referred to as being "directly connected", "directly coupled", "directly responsive", or variants thereof to another node, there are no intervening nodes present. Like numbers refer to like nodes throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, nodes, steps, components or functions but does not preclude the presence or addition of one or more other features, integers, nodes, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

The above-described example embodiments are intended to be illustrative in all respects, rather than restrictive, of the present invention. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items. Additionally, the term "user" is meant to be inclusive of an individual, a group and an organization.

## Claims

1. A method by a resource management node (1300) for managing resource nodes (1330) connected to a network (1380), the method comprising the steps of:
establishing (1502) clusters of the resource nodes (1330) and associated data flows that are permitted through the network (1380) between the resource nodes (1330) within each cluster and a user equipment node (1320), and associated rules that control the data flows;
determining (1504) that a first one of the rules has been satisfied to control a data flow for a first resource node in a first cluster; and
communicating (1506) information to the user equipment node (1320) that causes the user equipment node (1320) to prioritize handling of the data flow for the first resource node and other resource nodes (1330) in the first cluster in response to the first rule being satisfied, wherein the step of communicating (1506) information comprises the steps of:
controlling (2302) the first resource node and at least one other resource node in the first cluster to start pushing information to the user equipment node (1320) without waiting for corresponding requests from the user equipment node (1320); and
controlling (2304) the user equipment node (1320) to receive and display the pushed information received from the first resource node and the at least one other resource node in the first cluster.

2. The method by the resource management node (1300) of Claim 1, wherein the step of establishing clusters of the resource nodes (1330) and associated data flows comprises:
identifying (1602) complementary functionality provided by particular ones of the resource nodes (1330); and
establishing (1604) the first cluster to contain the particular ones of the resource nodes (1330) having the identified complementary functionality.

3. The method by the resource management node (1300) of Claim 2, wherein the step of identifying complementary functionality provided by particular ones of the resource nodes (1330) comprises:
determining (1702) spatial proximity of the particular ones of the resource nodes (1330) relative to the first resource node controlled by the first rules being satisfied; and
establishing (1704) the first cluster to contain selected ones of the particular resource nodes (1330) having relative spatial proximities that satisfies one or more defined rules.

4. The method by the resource management node (1300) of Claim 2, wherein the step of identifying complementary functionality provided by particular ones of the resource nodes (1330) comprises:
determining (1802) spatial proximity of the particular ones of the resource nodes (1330) to each other; and
establishing (1804) the first cluster to contain selected ones of the particular resource nodes (1330) having a determined spatial proximity that satisfies one or more defined rules.

5. The method by the resource management node (1300) of Claim 2, wherein the step of identifying complementary functionality provided by particular ones of the resource nodes (1330) comprises:
identifying (1902) compatible functional interfaces provided by particular ones of the resource nodes (1330);
identifying (1904) a function that is provided by clustering of the particular ones of the resource nodes (1330) having the compatible functional interfaces;
communicating (1906) a request to the user equipment node (1320) that identifies the function and seeks authorization from a user to setup clustering of the particular ones of the resource nodes (1330); and
establishing (1908) the first cluster to contain the particular ones of the resource nodes (1330) having the compatible functional interfaces in response to receiving authorization from the user.

6. The method by the resource management node (1300) of Claim 1, wherein the step of establishing clusters of the resource nodes (1330) and associated data flows comprises:
communicating (2002) a friendship request for at least some of the resource nodes (1330) to the user equipment node (1320) for acceptance by a user; and
establishing (2004) the first cluster to include selected ones of the resource nodes (1330) for which responses are received from the user equipment node (1320) indicating acceptance of the associated friendship requests by the user.

7. The method by the resource management node (1300) of Claim 1, wherein the step of establishing clusters of the resource nodes (1330) and associated data flows comprises:
selectively (2102) forwarding from a second one of the resource nodes (1330) to the user equipment node (1320), information contained in a data flow from the second resource node depending upon whether the second resource node is in the first cluster and the first rule has been satisfied.

8. The method by the resource management node (1300) of Claim 1, wherein the step of establishing clusters of the resource nodes (1330) and associated data flows comprises:
restricting (2202) the ability of other resource nodes (1330) to control the first resource node to being required to be in the first cluster or in a second cluster of the resource nodes (1330) that also includes the first resource node.

9. The method of Claim 1, further comprising the step by the user equipment node (1320) of:
controlling (2402) display, on a display device of the user equipment node (1320), of information received from any of the resource nodes (1330) in the first cluster to prioritize the received information for observation by a user in response to the first rule being satisfied.

10. The method of Claim 9, wherein the step by the user equipment node (1320) of controlling display of the information comprises:
controlling (2404) color of the displayed information to be unique relative to other information being concurrently displayed on the display device that is from other resource nodes (1330) that are not in the first cluster, and/or controlling (2406) size of the displayed information to be different from other information being concurrently displayed on the display device that is from other resource nodes (1330) that are not in the first cluster.

11. A resource management node (1300) configured to manage a plurality of resource nodes (1330) connected to a network (1380), the resource management node (1300) comprising:
an interaction flow database (1306) containing information defining clusters of the resource nodes (1330) and associated data flows that are permitted between the resource nodes (1330) within each cluster and a user equipment node (1320) through the network (1380), and defining associated rules that control the data flows; and
an interaction execution engine (1310) configured to:
determine that a first one of the rules has been satisfied to control a data flow for a first resource node in a first cluster,
control (2302) the first resource node and at least one other resource node in the first cluster to start pushing information to the user equipment node (1320) without waiting for corresponding requests from the user equipment node (1320) in response to the first rule being satisfied, and
communicate information to the user equipment node (1320) that causes the user equipment node (1320) to prioritize handling of the data flow for the first resource node and other resource nodes (1330) in the first cluster by receiving and displaying the pushed information from the first resource node and the at least one other resource node in the first cluster, in response to the first rule being satisfied.

12. The resource management node (1300) of Claim 11, wherein the interaction execution engine (1310) is further configured to:
identify (1602) complementary functionality provided by particular ones of the resource nodes (1330); and
provide (1604) information in the interaction flow database (1306) that establishes the first cluster to contain the particular ones of the resource nodes (1330) having the identified complementary functionality.

13. The resource management node (1300) of Claim 12, wherein the interaction execution engine (1310) is further configured to:
determine (1702) spatial proximity of the particular ones of the resource nodes (1330) to the first resource node controlled by the first rules being satisfied; and
provide (1704) information in the interaction flow database (1306) that establishes the first cluster to contain selected ones of the particular resource nodes (1330) having relative spatial proximities that satisfies one or more defined rules.

14. The resource management node (1300) of Claim 12,
wherein the interaction execution engine (1310) is further configured to:
identify (1902) compatible functional interfaces provided by particular ones of the resource nodes (1330);
identify (1904) a function that is provided by clustering of the particular ones of the resource nodes (1330) having the compatible functional interfaces;
communicate (1906) a request to the user equipment node (1320) that identifies the function and seeks authorization from a user to setup clustering of the particular ones of the resource nodes (1330); and
provide (1908) information in the interaction flow database that establishes the first cluster to contain the particular ones of the resource nodes (1330) having the compatible functional interfaces in response to receiving authorization from the user.

15. A user equipment node (1320) configured to control a resource management node (1300) managing a plurality of resources nodes connected to a network (1380), the user equipment node (1320) comprises:
a network interface (2510) configured to communicate with the resource management node (1300) through the network (1380);
a display device (2550), and
a controller circuit (2520) configured to:
receive information from the resource management node (1300) that identifies a resource node for which a defined rule has been satisfied;
identify other resources nodes that are in a same defined cluster as the resource node;
prioritize handling of a data flow for the resource node and the identified other resource nodes in the same defined cluster;
wherein the controller circuit (2520) is further configured to respond to receiving information from the resource management node (1300) that identifies the resource node for which the defined rule has been satisfied by:
controlling (2302) the identified resource node and at least one other resource node in the same defined cluster to start pushing information to the user equipment node (1320) without waiting for corresponding requests from the user equipment node (1320); and
controlling (2304) the user equipment node (1320) to receive and display the pushed information received from the identified resource node and at least one other resource node in the same defined cluster on the display device (2550).

## Patentansprüche

1. Verfahren durch einen Ressourcenverwaltungsknoten (1300) zum Verwalten von Ressourcenknoten (1330), die mit einem Netz (1380) verbunden sind, wobei das Verfahren folgende Schritte umfasst:
Erstellen (1502) von Clustern der Ressourcenknoten (1330) und zugehörigen Datenflüsse, die durch das Netz (1380) zwischen den Ressourcenknoten (1330) innerhalb jedes Clusters und einem Benutzergeräteknoten (1320) zugelassen werden, und zugehörigen Regeln, die die Datenflüsse steuern;
Bestimmen (1504), dass eine erste der Regeln erfüllt wurde, um einen Datenfluss für einen ersten Ressourcenknoten in einem ersten Cluster zu steuern; und
Übermitteln (1506) von Informationen an den Benutzergeräteknoten (1320), die den Benutzergeräteknoten (1320) veranlassen, in Reaktion darauf, dass die erste Regel erfüllt ist die Handhabung des Datenflusses für den ersten Ressourcenknoten und den weiteren Ressourcenknoten (1330) im ersten Cluster zu priorisieren, wobei der Schritt des Übermitteins (1506) von Informationen folgende Schritte umfasst:
Steuern (2302) des ersten Ressourcenknotens und wenigstens einen weiteren Ressourcenknotens im ersten Cluster derart, dass sie beginnen, Informationen an den Benutzergeräteknoten (1320) zu übertragen, ohne auf entsprechende Anfragen vom Benutzergeräteknoten (1320) zu warten; und
Steuern (2304) des Benutzergeräteknotens (1320), um die übertragenen Informationen, die vom ersten Ressourcenknoten und dem wenigstens einen weiteren Ressourcenknoten im ersten Cluster empfangen wurden, zu empfangen und anzuzeigen.

2. Verfahren durch den Ressourcenverwaltungsknoten (1300) nach Anspruch 1, wobei der Schritt des Erstellens von Clustern der Ressourcenknoten (1330) und zugehörigen Datenflüssen Folgendes umfasst:
Identifizieren (1602) komplementärer Funktionen, die durch bestimmte der Ressourcenknoten (1330) bereitgestellt werden; und
Erstellen (1604) des ersten Clusters, so dass die bestimmten der Ressourcenknoten (1330) mit den identifizierten komplementären Funktionen enthält.

3. Verfahren durch den Ressourcenverwaltungsknoten (1300) nach Anspruch 2, wobei der Schritt des Identifizierens komplementärer Funktionen, die durch bestimmte der Ressourcenknoten (1330) bereitgestellt werden, Folgendes umfasst:
Bestimmen (1702) räumlicher Nähe der bestimmten der Ressourcenknoten (1330) relativ zum ersten Ressourcenknoten, der gesteuert wird, indem die ersten Regeln erfüllt sind; und
Erstellen (1704) des ersten Clusters derart, dass es ausgewählte der bestimmten Ressourcenknoten (1330) mit relativer räumlicher Nähe enthält, die eine oder mehrere definierte Regeln erfüllt.

4. Verfahren durch den Ressourcenverwaltungsknoten (1300) nach Anspruch 2, wobei der Schritt des Identifizierens komplementärer Funktionen, die durch bestimmte der Ressourcenknoten (1330) bereitgestellt werden, Folgendes umfasst:
Bestimmen (1802) räumlicher Nähe der bestimmten der Ressourcenknoten (1330) zueinander; und
Erstellen (1804) des ersten Clusters derart, dass es ausgewählte der bestimmten Ressourcenknoten (1330) mit einer bestimmten räumlichen Nähe enthält, die eine oder mehrere definierte Regeln erfüllt.

5. Verfahren durch den Ressourcenverwaltungsknoten (1300) nach Anspruch 2, wobei der Schritt des Identifizierens komplementärer Funktionen, die durch bestimmte der Ressourcenknoten (1330) bereitgestellt werden, Folgendes umfasst:
Identifizieren (1902) kompatibler Funktionsschnittstellen, die von bestimmten der Ressourcenknoten (1330) bereitgestellt werden;
Identifizieren (1904) einer Funktion, die durch das Clustern der bestimmten der Ressourcenknoten (1330) mit den kompatiblen Funktionsschnittstellen bereitgestellt wird;
Übermitteln (1906) einer Anfrage an den Benutzergeräteknoten (1320), die die Funktion identifiziert und eine Autorisierung von einem Benutzer erfragt, das Clustern bestimmter der Ressourcenknoten (1330) einzurichten; und
Erstellen (1908) des ersten Clusters derart, dass es die bestimmten der Ressourcenknoten (1330) mit den kompatiblen Funktionsschnittstellen enthält, in Reaktion auf das Empfangen der Autorisierung von dem Benutzer.

6. Verfahren durch den Ressourcenverwaltungsknoten (1300) nach Anspruch 1, wobei der Schritt des Erstellens von Clustern der Ressourcenknoten (1330) und zugehörigen Datenflüssen Folgendes umfasst:
Übermitteln (2002) einer Freundschaftsanfrage für wenigstens einige der Ressourcenknoten (1330) an den Benutzergeräteknoten (1320) zur Annahme durch einen Benutzer; und
Erstellen (2004) des ersten Clusters derart, dass es ausgewählte der Ressourcenknoten (1330) enthält, von denen Antworten vom Benutzergeräteknoten (1320) empfangen wurden, die eine Annahme der zugehörigen Freundschaftsanfragen durch den Benutzer angeben.

7. Verfahren durch den Ressourcenverwaltungsknoten (1300) nach Anspruch 1, wobei der Schritt des Erstellens von Clustern der Ressourcenknoten (1330) und zugehörigen Datenflüssen Folgendes umfasst:
selektives (2102) Weiterleiten von Informationen, die in einem Datenfluss von dem zweiten Ressourcenknoten enthalten sind, von einem zweiten der Ressourcenknoten (1330) an den Benutzergeräteknoten (1320), abhängig davon, ob der zweite Ressourcenknoten im ersten Cluster ist und die erste Regel erfüllt wurde.

8. Verfahren durch den Ressourcenverwaltungsknoten (1300) nach Anspruch 1, wobei der Schritt des Erstellens von Clustern der Ressourcenknoten (1330) und zugehörigen Datenflüssen Folgendes umfasst:
Einschränken (2202) der Fähigkeit anderer Ressourcenknoten (1330), den ersten Ressourcenknoten derart zu steuern, dass er in dem ersten Cluster oder in einem zweiten Cluster der Ressourcenknoten (1330) sein muss, das auch den ersten Ressourcenknoten enthält.

9. Verfahren nach Anspruch 1, ferner folgenden Schritt durch den Benutzergeräteknoten (1320) umfassend:
Steuern (2402) einer Anzeige von Informationen, die von beliebigen der Ressourcenknoten (1330) im ersten Cluster empfangen wurden, auf einer Anzeigevorrichtung des Benutzergeräteknotens (1320), um die empfangenen Informationen zur Betrachtung durch einen Benutzer zu priorisieren, in Reaktion darauf, dass die erste Regel erfüllt ist.

10. Verfahren nach Anspruch 9, wobei der Schritt durch den Benutzergeräteknoten (1320) des Steuerns der Anzeige von Informationen Folgendes umfasst:
Steuern (2404) der Farbe der angezeigten Informationen derart, dass sie relativ zu anderen Informationen eindeutig ist, die gleichzeitig auf der Anzeigevorrichtung angezeigt werden und von anderen Ressourcenknoten (1330) stammen, die nicht in dem ersten Cluster sind, und/oder Steuern (2406) der Größe der angezeigten Informationen derart, dass sie anders als die von anderen Informationen ist, die gleichzeitig auf der Anzeigevorrichtung angezeigt werden und von anderen Ressourcenknoten (1330) stammen, die nicht in dem ersten Cluster sind.

11. Ressourcenverwaltungsknoten (1300), der zum Verwalten einer Mehrzahl von Ressourcenknoten (1330) konfiguriert ist, die mit einem Netz (1380) verbunden sind, wobei der Ressourcenverwaltungsknoten (1300) Folgendes umfasst:
eine Interaktionsablaufdatenbank (1306), die Informationen enthält, die das Cluster der Ressourcenknoten (1330) und zugehörige Datenflüsse definieren, die zwischen den Ressourcenknoten (1330) in jedem Cluster und einem Benutzergeräteknoten (1320) durch das Netz (1380) zugelassen werden, und zugehörige Regeln definieren, die die Datenflüsse steuern; und
eine Interaktionsausführungs-Engine (1310), die dazu konfiguriert ist:
zu bestimmen, dass eine erste der Regeln erfüllt wird, um einen Datenfluss für einen ersten Ressourcenknoten in einem ersten Cluster zu steuern; und
den ersten Ressourcenknoten und wenigstens einen weiteren Ressourcenknoten in ersten Cluster derart zu steuern, dass sie beginnen, Informationen an den Benutzergeräteknoten (1320) zu übertragen, ohne auf entsprechende Anfragen vom Benutzergeräteknoten (1320) zu warten; und
Informationen an den Benutzergeräteknoten (1320) zu übermitteln, die den Benutzergeräteknoten (1320) veranlassen, die Handhabung des Datenflusses für den Ressourcenknoten und weitere Ressourcenknoten (1330) im ersten Cluster zu priorisieren, indem er die übermittelten Informationen vom ersten Ressourcenknoten und dem wenigstens einen weiteren Ressourcenknoten im ersten Cluster empfängt und anzeigt, in Reaktion darauf, dass die erste Regel erfüllt wird.

12. Ressourcenverwaltungsknoten (1300) nach Anspruch 11, wobei die Interaktionsausführungs-Engine (1310) ferner dazu konfiguriert ist:
komplementäre Funktionen zu identifizieren (1602), die durch bestimmte der Ressourcenknoten (1330) bereitgestellt werden; und
Informationen in der Interaktionsablaufdatenbank (1306) bereitzustellen (1604), die das erste Custer derart erstellen, dass es die bestimmten der Ressourcenknoten (1330) mit den identifizierten komplementären Funktionen enthält.

13. Ressourcenverwaltungsknoten (1300) nach Anspruch 12, wobei die Interaktionsausführungs-Engine (1310) ferner dazu konfiguriert ist:
räumliche Nähe der bestimmten der Ressourcenknoten (1330) relativ zum ersten Ressourcenknoten zu bestimmen (1702), der gesteuert wird, indem die ersten Regeln erfüllt sind; und
Informationen in der Interaktionsablaufdatenbank (1306) bereitzustellen (1704), die das erste Cluster derart erstellen, dass es ausgewählte der bestimmten Ressourcenknoten (1330) mit relativer räumlicher Nähe enthält, die eine oder mehrere definierte Regeln erfüllt.

14. Ressourcenverwaltungsknoten (1300) nach Anspruch 12, wobei die Interaktionsausführungs-Engine (1310) ferner dazu konfiguriert ist:
kompatible Funktionsschnittstellen zu identifizieren (1902), die von bestimmten der Ressourcenknoten (1330) bereitgestellt werden;
eine Funktion zu identifizieren (1904), die durch das Clustern der bestimmten der Ressourcenknoten (1330) mit den kompatiblen Funktionsschnittstellen bereitgestellt wird;
eine Anfrage an den Benutzergeräteknoten (1320) zu übermitteln (1906), die die Funktion identifiziert und eine Autorisierung von einem Benutzer erfragt, das Clustern bestimmter der Ressourcenknoten (1330) einzurichten; und
Informationen in der Interaktionsablaufdatenbank bereitzustellen (1908), die das erste Custer derart erstellen, dass es die bestimmten der Ressourcenknoten (1330) mit den kompatiblen Funktionsschnittstellen enthält, in Reaktion auf das Empfangen der Autorisierung von dem Benutzer.

15. Benutzergeräteknoten (1320), der zum Steuern eines Ressourcenverwaltungsknotens (1300) konfiguriert ist, der eine Mehrzahl von Ressourcenknoten verwaltet, die mit einem Netz (1380) verbunden sind, wobei der Benutzergeräteknoten (1320) Folgendes umfasst:
eine Netzschnittstelle (2510), die zum Kommunizieren mit dem Ressourcenverwaltungsknoten (1300) durch das Netz (1380) konfiguriert ist;
eine Anzeigevorrichtung (2550), und
eine Steuerschaltung (2520), die dazu konfiguriert ist:
Informationen vom Ressourcenverwaltungsknoten (1300) zu empfangen, die einen Ressourcenknoten identifizieren, für den eine definierte Regel erfüllt wird;
weitere Ressourcenknoten zu identifizieren, die in demselben definierten Cluster wie der Ressourcenknoten sind;
die Handhabung eines Datenflusses für den Ressourcenknoten und den identifizierten weiteren Ressourcenknoten in demselben definierten Cluster zu priorisieren;
wobei die Steuerschaltung (2520) ferner dazu konfiguriert ist, auf das Empfangen von Informationen von dem Ressourcenverwaltungsknoten (1300), die den Ressourcenknoten identifizieren, für den die definierte Regel erfüllt wird, zu reagieren durch:
Steuern (2302) des identifizierten Ressourcenknotens und wenigstens einen weiteren Ressourcenknotens in demselben definierten Cluster derart, dass sie beginnen, Informationen an den Benutzergeräteknoten (1320) zu übertragen, ohne auf entsprechende Anfragen vom Benutzergeräteknoten (1320) zu warten; und
Steuern (2304) des Benutzergeräteknotens (1320), um die übertragenen Informationen, die vom identifizierten Ressourcenknoten und wenigstens einen weiteren Ressourcenknoten in demselben definierten Cluster auf der Anzeigevorrichtung (2550) empfangen wurden, zu empfangen und anzuzeigen.

## Revendications

1. Procédé, par un noeud de gestion de ressource (1300), permettant de gérer des noeuds de ressource (1330) connectés à un réseau (1380), le procédé comprenant les étapes suivantes :
l'établissement (1502) de grappes de noeuds de ressource (1330) et de flux de données associés qui sont permis, par l'intermédiaire du réseau (1380), entre les noeuds de ressource (1330) se trouvant dans chaque grappe et un noeud d'équipement utilisateur (1320), et de règles associées qui contrôlent les flux de données ;
la détermination (1504) qu'une première règle parmi les règles a été satisfaite pour contrôler un flux de données pour un premier noeud de ressource dans une première grappe ; et
la communication (1506) d'informations au noeud d'équipement utilisateur (1320) qui amènent le noeud d'équipement utilisateur (1320) à donner la priorité au traitement du flux de données pour le premier noeud de ressource et les autres noeuds de ressource (1330) se trouvant dans la première grappe en réponse au fait que la première règle est satisfaite, dans lequel l'étape de communication (1506) d'informations comprend les étapes suivantes :
le contrôle (2302) du premier noeud de ressource et d'au moins un autre noeud de ressource se trouvant dans la première grappe pour commencer à pousser les informations vers le noeud d'équipement utilisateur (1320) sans attendre les demandes correspondantes provenant du noeud d'équipement utilisateur (1320) ; et
le contrôle (2304) du noeud d'équipement utilisateur (1320) pour recevoir et afficher les informations poussées reçues depuis le premier noeud de ressource et le au moins un autre noeud de ressource se trouvant dans la première grappe.

2. Procédé par le noeud de gestion de ressource (1300) selon la revendication 1, dans lequel l'étape d'établissement des grappes des noeuds de ressource (1330) et des flux de données associés comprend :
l'identification (1602) d'une fonctionnalité complémentaire fournie par des noeuds de ressource particuliers parmi les noeuds de ressource (1330) ; et
l'établissement (1604) de la première grappe pour qu'elle contienne les noeuds de ressource particuliers parmi les noeuds de ressource (1330) ayant la fonctionnalité complémentaire identifiée.

3. Procédé par le noeud de gestion de ressource (1300) selon la revendication 2, dans lequel l'étape d'identification d'une fonctionnalité complémentaire fournie par des noeuds de ressource particuliers parmi les noeuds de ressource (1330) comprend :
la détermination (1702) d'une proximité spatiale des noeuds de ressource particuliers parmi les noeuds de ressource (1330) par rapport au premier noeud de ressource contrôlé par les premières règles satisfaites ; et
l'établissement (1704) de la première grappe pour qu'elle contienne des noeuds de ressource particuliers sélectionnés parmi les noeuds de ressource (1330) particuliers présentant des proximités spatiales relatives qui satisfait une ou plusieurs des règles définies.

4. Procédé par le noeud de gestion de ressource (1300) selon la revendication 2, dans lequel l'étape d'identification d'une fonctionnalité complémentaire fournie par des noeuds de ressource particuliers parmi les noeuds de ressource (1330) comprend :
la détermination (1802) d'une proximité spatiale des noeuds de ressource particuliers parmi les noeuds de ressource (1330) les uns par rapport aux autres ; et
l'établissement (1804) de la première grappe pour qu'elle contienne des noeuds de ressource sélectionnés parmi les noeuds de ressource (1330) particuliers présentant une proximité spatiale déterminée qui satisfait une ou plusieurs règles définies.

5. Procédé par le noeud de gestion de ressource (1300) selon la revendication 2, dans lequel l'étape d'identification d'une fonctionnalité complémentaire fournie par des noeuds de ressource particuliers parmi les noeuds de ressource (1330) comprend :
l'identification (1902) d'interfaces fonctionnelles compatibles fournies par des noeuds de ressource particuliers parmi les noeuds de ressource (1330) ;
l'identification (1904) d'une fonction qui est fournie par le regroupement des noeuds de ressource particuliers parmi les noeuds de ressource (1330) présentant les interfaces fonctionnelles compatibles ;
la communication (1906) d'une demande au noeud d'équipement utilisateur (1320) qui identifie la fonction et demande l'autorisation à un utilisateur d'organiser le regroupement des noeuds de ressource particuliers parmi les noeuds de ressource (1330) ; et
l'établissement (1908) de la première grappe pour qu'elle contienne les noeuds de ressource particuliers parmi les noeuds de ressource (1330) présentant les interfaces fonctionnelles compatibles en réponse à la réception d'une autorisation provenant de l'utilisateur.

6. Procédé par le noeud de gestion de ressource (1300) selon la revendication 1, dans lequel l'étape d'établissement des grappes des noeuds de ressource (1330) et des flux de données associés comprend :
la communication (2002) d'une demande d'ami pour au moins certains des noeuds de ressource (1330) au noeud d'équipement utilisateur (1320) à des fins d'acceptation par un utilisateur ; et
l'établissement (2004) de la première grappe pour qu'elle comprenne les noeuds de ressource sélectionnés parmi les noeuds de ressource (1330) pour lesquels des réponses sont reçues depuis le noeud d'équipement utilisateur (1320) indiquant l'acceptation des demandes d'ami associées par l'utilisateur.

7. Procédé par le noeud de gestion de ressource (1300) selon la revendication 1, dans lequel l'étape d'établissement des grappes des noeuds de ressource (1330) et des flux de données associés comprend :
l'envoi sélectif (2102), à partir d'un deuxième noeud de ressource parmi les noeuds de ressource (1330) vers le noeud d'équipement utilisateur (1320), d'informations contenues dans un flux de données provenant du deuxième noeud de ressource en fonction du fait que le deuxième noeud de ressource se trouve dans la première grappe et la première règle a été satisfaite.

8. Procédé par le noeud de gestion de ressource (1300) selon la revendication 1, dans lequel l'étape d'établissement des grappes des noeuds de ressource (1330) et des flux de données associés comprend :
la restriction (2202) de la capacité d'autre noeuds de ressource (1330) à contrôler le fait qu'il est nécessaire que le premier noeud de ressource se trouve dans la première grappe ou dans une deuxième grappe des noeuds de ressource (1330) qui inclut également le premier noeud de ressource.

9. Procédé selon la revendication 1, comprenant en outre l'étape par le noeud d'équipement utilisateur (1320) suivante :
le contrôle (2402) de l'affichage, sur un dispositif d'affichage du noeud d'équipement utilisateur (1320), d'informations reçues depuis l'un quelconque des noeuds de ressource (1330) dans la première grappe pour rendre prioritaire l'observation des informations reçues par un utilisateur en réponse à la première règle satisfaite.

10. Procédé selon la revendication 9, dans lequel l'étape par le noeud d'équipement utilisateur (1320) de contrôle de l'affichage des informations comprend :
le contrôle (2404) de la couleur des informations affichées de façon à ce qu'elles soient uniques par rapport à d'autres informations affichées en même temps sur le dispositif d'affichage qui proviennent d'autres noeuds de ressource (1330) ne se trouvant pas dans la première grappe, et/ou le contrôle (2406) de la taille des informations affichées de façon à ce qu'elles soient différentes des autres informations affichées en même temps sur le dispositif d'affichage qui proviennent d'autres noeuds de ressource (1330) ne se trouvant pas dans la première grappe.

11. Noeud de gestion de ressource (1300) configuré pour gérer une pluralité de noeuds de ressource (1330) connectés à un réseau (1380), le noeud de gestion de ressource (1300) comprenant :
une base de données de flux d'interaction (1306) contenant des informations définissant des grappes des noeuds de ressource (1330) et des flux de données associés qui sont permis entre les noeuds de ressource (1330) se trouvant dans chaque grappe et un noeud d'équipement utilisateur (1320) par l'intermédiaire du réseau (1380), et définissant des règles associées qui contrôlent les flux de données ; et
un moteur d'exécution d'interaction (1310) configuré pour :
déterminer qu'une première règle parmi les règles a été satisfaite pour contrôler un flux de données pour un premier noeud de ressource dans une première grappe,
contrôler (2302) le premier noeud de ressource et au moins un autre noeud de ressource se trouvant dans la première grappe pour commencer à pousser les informations vers le noeud d'équipement utilisateur (1320) sans attendre les demandes correspondantes provenant du noeud d'équipement utilisateur (1320) en réponse au fait que la première règle est satisfaite, et
communiquer des informations au noeud d'équipement utilisateur (1320) qui amènent le noeud d'équipement utilisateur (1320) à donner la priorité au traitement du flux de données pour le premier noeud de ressource et les autres noeuds de ressource (1330) se trouvant dans la première grappe par la réception et l'affichage des informations poussées provenant du premier noeud de ressource et du au moins un autre noeud de ressource se trouvant dans la première grappe, en réponse au fait que la première règle est satisfaite.

12. Noeud de gestion de ressource (1300) selon la revendication 11, dans lequel le moteur d'exécution d'interaction (1310) est configuré en outre pour :
identifier (1602) une fonctionnalité complémentaire fournie par des noeuds de ressource particuliers parmi les noeuds de ressource (1330) ; et
fournir (1604) des informations dans la base de données de flux d'interaction (1306) qui établissent la première grappe pour qu'elle contienne les noeuds de ressource particuliers parmi les noeuds de ressource (1330) ayant la fonctionnalité complémentaire identifiée.

13. Noeud de gestion de ressource (1300) selon la revendication 12, dans lequel le moteur d'exécution d'interaction (1310) est configuré en outre pour :
déterminer (1702) une proximité spatiale des noeuds de ressource particuliers parmi les noeuds de ressource (1330) par rapport au premier noeud de ressource contrôlé par les premières règles satisfaite ; et
fournir (1704) des informations dans la base de données de flux d'interaction (1306) qui établissent la première grappe pour qu'elle contienne des noeuds de ressource particuliers sélectionnés parmi les noeuds de ressource (1330) particuliers présentant des proximités spatiales relatives qui satisfait une ou plusieurs des règles définies.

14. Noeud de gestion de ressource (1300) selon la revendication 12, dans lequel le moteur d'exécution d'interaction (1310) est configuré en outre pour :
identifier (1902) des interfaces fonctionnelles compatibles fournies par des noeuds de ressource particuliers parmi les noeuds de ressource (1330) ;
identifier (1904) une fonction qui est fournie par le regroupement des noeuds de ressource particuliers parmi les noeuds de ressource (1330) présentant les interfaces fonctionnelles compatibles ;
communiquer (1906) une demande au noeud d'équipement utilisateur (1320) qui identifie la fonction et demande l'autorisation à un utilisateur d'organiser le regroupement des noeuds de ressource particuliers parmi les noeuds de ressource (1330) ; et
fournir (1908) des informations dans la base de données de flux d'interaction qui établissent la première grappe pour qu'elle contienne les noeuds de ressource particuliers parmi les noeuds de ressource (1330) présentant les interfaces fonctionnelles compatibles en réponse à la réception d'une autorisation provenant de l'utilisateur.

15. Noeud d'équipement utilisateur (1320) configuré pour contrôler un noeud de gestion de ressource (1300) gérant une pluralité de noeuds de ressource connectés à un réseau (1380), le noeud d'équipement utilisateur (1320) comprenant :
une interface réseau (2510) configurée pour communiquer avec le noeud de gestion de ressource (1300) par l'intermédiaire du réseau (1380) ;
un dispositif d'affichage (2550), et
un circuit contrôleur (2520) configuré pour :
recevoir des informations provenant du noeud de gestion de ressource (1300) qui identifient un noeud de ressource pour lequel une règle définie a été satisfaite ;
identifier d'autres noeuds de ressource se trouvant dans une même grappe définie que le noeud de ressource ;
donner la priorité au traitement d'un flux de données pour le noeud de ressource et les autres noeuds de ressource identifiés se trouvant dans la même grappe définie ;
dans lequel le circuit contrôleur (2520) est configuré en outre pour répondre à la réception d'informations provenant du noeud de gestion de ressource (1300) qui identifient le noeud de ressource pour lequel la règle définie a été satisfaite, par :
le contrôle (2302) du noeud de ressource identifié et d'au moins un autre noeud de ressource se trouvant dans la même grappe définie pour commencer à pousser des informations vers le noeud d'équipement utilisateur (1320) sans attendre les demandes correspondantes provenant du noeud d'équipement utilisateur (1320) ; et
le contrôle (2304) du noeud d'équipement utilisateur (1320) pour recevoir et afficher les informations poussées reçues depuis le noeud de ressource identifié et le au moins un autre noeud de ressource se trouvant dans la même grappe définie sur le dispositif d'affichage (2550).
